# EUROPEAN PATENT SPECIFICATION

(11) **EP 4 329 076 B1**
(45) Date of publication and mention of the grant of the patent: **04.11.2026**
(21) Application number: 22799181.7
(22) Date of filing: 09.05.2022
(51) Int. Cl.: H01M 10/052, H01M 50/403, H01M 50/417, H01M 50/42, H01M 50/426, H01M 50/446, H01M 50/449, H01M 50/451, H01M 50/457, H01M 50/489, H01M 50/491, C08J 3/24, C08J 7/04, C08J 7/18, C08J 9/28, C08J 9/36, C08L 23/00, C08L 23/26

(54) **CROSSLINKED STRUCTURE-CONTAINING OLEFIN POLYMER POROUS SUPPORT, CROSSLINKED STRUCTURE-CONTAINING SEPARATOR FOR LITHIUM SECONDARY BATTERY INCLUDING THE SAME AND METHOD FOR MANUFACTURING THE SAME, AND LITHIUM SECONDARY BATTERY INCLUDING THE SEPARATOR**
PORÖSER OLEFINPOLYMERTRÄGER, SEPARATOR MIT VERNETZTER STRUKTUR FÜR LITHIUMSEKUNDÄRBATTERIE, DIE DIESEN ENTHÄLT , HERSTELLUNGSMETHODE DAFÜR UND LITHIUMSEKUNDÄRBATTERIE DIE DIESEN SEPARATOR ENTHÄLT
SUPPORT POREUX EN POLYMÈRE D'OLÉFINE CONTENANT UNE STRUCTURE RÉTICULÉE, SÉPARATEUR CONTENANT UNE STRUCTURE RÉTICULÉE POUR UNE BATTERIE SECONDAIRE AU LITHIUM INCLUANT LE SUPPORT, METHODE DE FABRICATION DU DIT SUPPORT, ET BATTERIE SECONDAIRE AU LITHIUM INCLUANT CE SÉPARATEUR

(30) Priority: 07.05.2021 KR 20210059585; 07.05.2021 KR 20210059586
(43) Date of publication of application: 28.02.2024
(73) Proprietor: LG Chem, Ltd., Yeongdeungpo-gu Seoul 07336 (KR)
(72) Inventor: LEE, Joo-Sung, Daejeon 34122 (KR); HAN, Sung-Jae, Daejeon 34122 (KR); MUN, Sung Cik, Daejeon 34122 (KR); HAN, Kyeong-Hwan, Daejeon 34122 (KR)
(74) Representative: Hoffmann Eitle
(86) International application number: PCT/KR2022/006588
(87) International publication number: WO 2022/235138

(56) References cited:
- EP-A1- 3 731 305
- JP-A- 2018 014 159
- KR-A- 20190 069 338
- KR-A- 20190 140 837
- KR-A- 20200 078 144
- KR-A- 20200 078 144
- KR-B1- 100 890 857
- US-A1- 2018 053 925
- US-A1- 2020 411 826

## Description

### TECHNICAL FIELD

The present application claims priority to Korean Patent Application No. 10-2021-0059585 and Korean Patent Application No. 10-2021-0059586 filed on May 7, 2021 in the Republic of Korea.

The present disclosure relates to a crosslinked structure-containing polyolefin porous support, a crosslinked structure-containing separator for a lithium secondary battery including the same and a method for manufacturing the same, and a lithium secondary battery including the separator.

### BACKGROUND ART

Recently, energy storage technology has been given an increasing attention. As the application of energy storage technology has been extended to energy for cellular phones, camcorders and notebook PCs and even to energy for electric vehicles, there has been an increasing need for providing batteries used as power sources for such electronic devices with high energy density. Lithium secondary batteries are those satisfying such a need best. Therefore, active studies have been conducted about such lithium secondary batteries.

Such a lithium secondary battery includes a positive electrode, a negative electrode, an electrolyte and a separator. Herein, the separator functions to separate the positive electrode and negative electrode from each other so that both electrodes may be insulated electrically from each other.

A polyolefin separator has been used widely as such a separator. However, in the case of a typical polyolefin separator, a polyethylene (PE) separator, it has a low melting point (Tₘ) and may cause ignition and explosion, when a battery is used abnormally and the battery temperature is increased to the melting point of polyethylene or higher to generate a meltdown phenomenon, and also shows a severe heat shrinking behavior under a high temperature condition due to its material property and characteristics during its manufacturing process, thereby causing a safety-related problem, such as an internal short-circuit. EP 3 731 305 A1 discloses a separator, comprising: fibrils comprising a polyolefin; and bond structures generated by reacting at least some of a first radical formed on surfaces of the fibrils by a photoreactive material and a second radical formed in the photoreactive material

Therefore, there is an imminent need for a separator capable of ensuring safety at high temperature.

### DISCLOSURE

### Technical Problem

The present disclosure is designed to solve the problems of the related art, and therefore the present disclosure is directed to providing a crosslinked structure-containing polyolefin porous support having improved high-temperature safety.

The present disclosure also relates to a crosslinked structure-containing separator for a lithium secondary battery including the crosslinked structure-containing polyolefin porous support, and a lithium secondary battery including the same and causing minimized degradation of performance even when being stored at high temperature.

In addition, the present disclosure is directed to providing a method for manufacturing a crosslinked structure-containing separator for a lithium secondary battery which can minimize side reactions, while allowing effective crosslinking of a polyolefin porous support.

### Technical Solution

In one aspect of the present disclosure, there is provided a crosslinked structure-containing polyolefin porous support according to any one of the following embodiments.

According to the first embodiment, there is provided a crosslinked structure-containing polyolefin porous support which has a number of double bonds present in the polyolefin chains of 0.01-0.6 per 1000 carbon atoms, as determined by ¹H-NMR, and includes a crosslinked structure having polymer chains interconnected directly with one another.

According to the second embodiment, there is provided the crosslinked structure-containing polyolefin porous support as defined in the first embodiment, which has a crosslinking degree of 10-45%.

In another aspect of the present disclosure, there is provided a crosslinked structure-containing separator for a lithium secondary battery according to any one of the following embodiments.

According to the third embodiment, there is provided a crosslinked structure-containing separator for a lithium secondary battery including the crosslinked structure-containing polyolefin support as defined in the first or the second embodiment.

According to the fourth embodiment, there is provided the crosslinked structure-containing separator for a lithium secondary battery as defined in the third embodiment, which further includes an inorganic composite porous layer disposed on at least one surface of the crosslinked structure-containing polyolefin porous support and including an inorganic filler and a binder polymer.

According to the fifth embodiment, there is provided the crosslinked structure-containing separator for a lithium secondary battery as defined in the fourth embodiment, wherein the inorganic filler includes BaTiO₃, Pb(Zr,Ti)O₃ (PZT), Pb₁₋ₓLaₓZr_{1-y}Ti_{y}O₃ (PLZT, wherein 0 < x < 1, 0 < y < 1), Pb(Mg_{1/3}Nb_{2/3})O₃-PbTiO₃ (PMN-PT), hafnia (HfO₂), SrTiO₃, SnO₂, CeO₂, MgO, Mg(OH)₂, NiO, CaO, ZnO, ZrO₂, SiO₂, Y₂O₃, Al₂O₃, AlOOH, Al(OH)₃, SiC, TiO₂, lithium phosphate (Li₃PO₄), lithium titanium phosphate (LiₓTi_{y}(PO₄)₃, 0 < x < 2, 0 < y < 3), lithium aluminum titanium phosphate (LiₓAl_{y}Ti_{z}(PO₄)₃, 0 < x < 2, 0 < y < 1, 0 < z < 3), (LiAlTiP)ₓO_{y}-based glass (1 < x < 4, 0 < y < 13), lithium germanium thiophosphate (LiₓGe_{y}P_{z}S_{w}, 0 < x < 4, 0 < y < 1, 0 < z < 1, 0 < w < 5), lithium nitride (LiₓN_{y}, 0 < x < 4, 0 < y < 2), SiS₂-based glass (LiₓSi_{y}S_{z}, 0 < x < 3, 0 < y < 2, 0 < z < 4), P₂S₅-based glass (LiₓP_{y}S_{z}, 0 < x < 3, 0 < y < 3, 0 < z < 7) , or two or more of them.

According to the sixth embodiment, there is provided the crosslinked structure-containing separator for a lithium secondary battery as defined in the fourth or the fifth embodiment, wherein the binder polymer includes poly(vinylidene fluoride-co-hexafluoropropylene), poly(vinylidene fluoride-co-chlorotrifluoroethylene), poly(vinylidene fluoride-co-tetrafluoroethylene), poly(vinylidene fluoride-co-trichloroethylene), acrylic copolymer, styrene-butadiene copolymer, poly(acrylic acid), poly(methyl methacrylate), poly(butyl acrylate), poly(acrylonitrile), poly(vinyl pyrrolidone), poly(vinyl alcohol), poly(vinyl acetate), poly(ethylene-co-vinyl acetate), poly(ethylene oxide), poly(arylate), cellulose acetate, cellulose acetate butyrate, cellulose acetate propionate, cyanoethylpullulan, cyanoethylpolyvinylalchol, cyanoethyl cellulose, cyanoethyl sucrose, pullulan, carboxymethyl cellulose, or two or more of them.

According to the seventh embodiment, there is provided the crosslinked structure-containing separator for a lithium secondary battery as defined in the third embodiment, which further includes: an inorganic composite porous layer disposed on at least one surface of the crosslinked structure-containing polyolefin porous support and including an inorganic filler and a first binder polymer; and
a porous adhesive layer disposed on the inorganic composite porous layer and including a second binder polymer.

According to the eighth embodiment, there is provided the crosslinked structure-containing separator for a lithium secondary battery as defined in the seventh embodiment, wherein the inorganic filler includes BaTiO₃, Pb(Zr,Ti)O₃ (PZT), Pb₁₋ₓLaₓZr_{1-y}Ti_{y}O₃ (PLZT, wherein 0 < x < 1, 0 < y < 1), Pb(Mg_{1/3}Nb_{2/3})O₃-PbTiO₃ (PMN-PT), hafnia (HfO₂), SrTiO₃, SnO₂, CeO₂, MgO, Mg(OH)₂, NiO, CaO, ZnO, ZrO₂, SiO₂, Y₂O₃, Al₂O₃, AlOOH, Al(OH)₃, SiC, TiO₂, lithium phosphate (Li₃PO₄), lithium titanium phosphate (LiₓTi_{y}(PO₄)₃, 0 < x < 2, 0 < y < 3), lithium aluminum titanium phosphate (LiₓAl_{y}Ti_{z}(PO₄)₃, 0 < x < 2, 0 < y < 1, 0 < z < 3), (LiAlTiP)ₓO_{y}-based glass (1 < x < 4, 0 < y < 13), lithium germanium thiophosphate (LiₓGe_{y}P_{z}S_{w}, 0 < x < 4, 0 < y < 1, 0 < z < 1, 0 < w < 5), lithium nitride (LiₓN_{y}, 0 < x < 4, 0 < y < 2), SiS₂-based glass (LiₓSi_{y}S_{z}, 0 < x < 3, 0 < y < 2, 0 < z < 4), P₂S₅-based glass (LiₓP_{y}S_{z}, 0 < x < 3, 0 < y < 3, 0 < z < 7) , or two or more of them.

According to the ninth embodiment, there is provided the crosslinked structure-containing separator for a lithium secondary battery as defined in the seventh or the eighth embodiment, wherein the first binder polymer includes acrylic polymer, polyacrylic acid, styrene butadiene rubber, polyvinyl alcohol, or two or more of them.

According to the tenth embodiment, there is provided the crosslinked structure-containing separator for a lithium secondary battery as defined in any one of the seventh to the ninth embodiments, wherein the second binder polymer includes poly(vinylidene fluoride), poly(vinylidene fluoride-co-hexafluoropropylene), poly(vinylidene fluoride-co-trichloroethylene), poly(vinylidene fluoride-co-tetrafluoroethylene), poly(vinylidene fluoride-co-trifluoroethylene), poly(methyl methacrylate), poly(ethylhexyl acrylate), poly(butyl acrylate), poly(acrylonitrile), poly(vinyl pyrrolidone), poly(vinyl acetate), poly(ethylhexyl acrylate-co-methyl methacrylate), poly(ethylene-co-vinyl acetate), polyethylene oxide, poly(arylate), or two or more of them.

According to the eleventh embodiment, there is provided the crosslinked structure-containing separator for a lithium secondary battery as defined in any one of the third to the tenth embodiments, which has a meltdown temperature of 160°C or higher.

According to the twelfth embodiment, there is provided the crosslinked structure-containing separator for a lithium secondary battery as defined in any one of the third to the eleventh embodiments, which has a shutdown temperature of 145°C or less.

In still another aspect of the present disclosure, there is provided a method for manufacturing a crosslinked structure-containing separator for a lithium secondary battery according to any one of the following embodiments.

According to the thirteenth embodiment, there is provided a method for manufacturing a crosslinked structure-containing separator for a lithium secondary battery, including the steps of:
preparing a polyolefin porous support including a photoinitiator and having a number of double bonds present in the polyolefin chains of 0.01-0.5 per 1000 carbon atoms, as determined by ¹H-NMR; and
irradiating ultraviolet rays to the polyolefin porous support including a photoinitiator,
wherein the content of the photoinitiator is 0.015-0.36 parts by weight based on 100 parts by weight of the polyolefin porous support.

According to the fourteenth embodiment, there is provided the method for manufacturing a crosslinked structure-containing separator for a lithium secondary battery as defined in the thirteenth embodiment, wherein an antioxidant is further added in the step of preparing a polyolefin porous support, and the content of the antioxidant is 500-20000 ppm based on the weight of the polyolefin porous support.

According to the fifteenth embodiment, there is provided the method for manufacturing a crosslinked structure-containing separator for a lithium secondary battery as defined in the fourteenth embodiment, wherein the antioxidant includes a first antioxidant which is a radical scavenger and a second antioxidant which is a peroxide decomposer.

According to the sixteenth embodiment, there is provided the method for manufacturing a crosslinked structure-containing separator for a lithium secondary battery as defined in the fifteenth embodiment, wherein the first antioxidant includes a phenolic antioxidant, an amine-based antioxidant, or a mixture thereof.

According to the seventeenth embodiment, there is provided the method for manufacturing a crosslinked structure-containing separator for a lithium secondary battery as defined in the fifteenth or the sixteenth embodiment, wherein the second antioxidant includes a phosphorus-based antioxidant, a sulfur-based antioxidant, or a mixture thereof.

According to the eighteenth embodiment, there is provided the method for manufacturing a crosslinked structure-containing separator for a lithium secondary battery as defined in any one of the fifteenth to the seventeenth embodiment, wherein the content of the first antioxidant is 500-10000 ppm based on the weight of the polyolefin porous support, and the content of the second antioxidant is 500-10000 ppm based on the weight of the polyolefin porous support.

According to the nineteenth embodiment, there is provided the method for manufacturing a crosslinked structure-containing separator for a lithium secondary battery as defined in any one of the thirteenth to the eighteenth embodiment, wherein the photoinitiator includes a Type 2 photoinitiator.

According to the twentieth embodiment, there is provided the method for manufacturing a crosslinked structure-containing separator for a lithium secondary battery as defined in any one of the thirteenth to the nineteenth embodiment, wherein the photoinitiator includes thioxanthone (TX), a thioxanthone derivative, benzophenone (BPO), a benzophenone derivative, or two or more of them.

According to the twenty-first embodiment, there is provided the method for manufacturing a crosslinked structure-containing separator for a lithium secondary battery as defined in any one of the thirteenth to the twentieth embodiments, wherein the step of preparing a polyolefin porous support includes coating and drying a photo-crosslinking composition containing a photoinitiator and a solvent on the outer side of the polyolefin porous support.

According to the twenty-second embodiment, there is provided the method for manufacturing a crosslinked structure-containing separator for a lithium secondary battery as defined in the twenty-first embodiment, wherein the photo-crosslinking composition is a photoinitiator solution including the photoinitiator and the solvent.

According to the twenty-third embodiment, there is provided the method for manufacturing a crosslinked structure-containing separator for a lithium secondary battery as defined in the twenty-first embodiment, wherein the photo-crosslinking composition is a slurry for forming an inorganic composite porous layer including an inorganic filler, a binder polymer, the photoinitiator and the solvent.

According to the twenty-fourth embodiment, there is provided the method for manufacturing a crosslinked structure-containing separator for a lithium secondary battery as defined in the twenty-first embodiment, wherein the step of coating and drying a photo-crosslinking composition including the photoinitiator and the solvent on the outer side of the polyolefin porous support includes:
coating a slurry for forming an inorganic composite porous layer including an inorganic filler, a first binder polymer and a dispersion medium on at least one surface of the polyolefin porous support, followed by drying, to form an inorganic composite porous layer; and
applying a coating solution for forming a porous adhesive layer including a second binder polymer, the photoinitiator and the solvent to the top surface of the inorganic composite porous layer, followed by drying.

According to the twenty-fifth embodiment, there is provided the method for manufacturing a crosslinked structure-containing separator for a lithium secondary battery as defined in any one of the thirteenth to the twenty-fourth embodiments, wherein the ultraviolet rays are irradiated at an irradiation light dose of 10-2000 mJ/cm².

In still another aspect of the present disclosure, there is provided a lithium secondary battery according to the following embodiment.

According to the twenty-sixth embodiment, there is provided a lithium secondary battery including a positive electrode, a negative electrode and a separator for a lithium secondary battery interposed between the positive electrode and the negative electrode, wherein the separator for a lithium secondary battery is the crosslinked structure-containing separator for a lithium secondary battery as defined in any one of the third to the twelfth embodiments.

### Advantageous Effects

The crosslinked structure-containing polyolefin porous support according to an embodiment of the present disclosure has a number of double bonds present in the polyolefin chains of 0.01-0.6 per 1000 carbon atoms, as determined by ¹H-NMR, and includes a crosslinked structure having polymer chains interconnected directly with one another, and thus can minimize side reactions, while showing excellent high-temperature safety.

The crosslinked structure-containing separator for a lithium secondary battery according to an embodiment of the present disclosure includes the crosslinked structure-containing polyolefin porous support according to an embodiment of the present disclosure, and thus can minimize side reactions, while showing excellent high-temperature safety.

The method for manufacturing a crosslinked structure-containing separator for a lithium secondary battery according to an embodiment of the present disclosure uses a photoinitiator in an amount of 0.015-0.036 parts by weight based on 100 parts by weight of the polyolefin porous support to perform crosslinking of the porous polyolefin porous support having a number of double bonds present in the polyolefin chains of 0.01-0.5 per 1000 carbon atoms, as determined by ¹H-NMR. In this manner, it is possible to minimize side reactions, while allowing effective crosslinking of the polyolefin porous support.

The lithium secondary battery according to an embodiment of the present disclosure includes the crosslinked structure-containing separator for a lithium secondary battery according to an embodiment of the present disclosure, and thus causes minimized degradation of performance even when being stored at high temperature.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a schematic view illustrating the crosslinked structure-containing separator for a lithium secondary battery according to an embodiment of the present disclosure.
FIG. 2 is a schematic view illustrating the crosslinked structure-containing separator for a lithium secondary battery according to another embodiment of the present disclosure.
FIG. 3 shows data illustrating the number of double bonds of the polyolefin porous support according to Example 1, as analyzed by NMR.
FIG. 4 shows data illustrating the number of double bonds of the polyolefin porous support according to Example 2, as analyzed by NMR.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

Throughout the specification, the terms, such as 'first' and 'second', are used to differentiate one constitutional element from the other constitutional elements, and each constitutional element is not limited to such terms.

According to the present disclosure, a photoinitiator alone may perform the crosslinking of the polyolefin support with no aid of another crosslinking agent, co-initiator or synergist. The photoinitiator is converted into a reactive compound, while hydrogen atoms are removed through hydrogen abstraction merely by light absorption. Then, the photoinitiator forms radicals in the polymer chains in the polyolefin porous support, and makes the polymer chains reactive, thereby allowing the polymer chains to be interconnected directly with one another to perform photo-crosslinking. For example, hydrogen may be abstracted by the photoinitiator from a small amount of double bond structures or branch structures present in the polyolefin, and thus hydrogen atoms may be removed from the polyolefin chains through hydrogen abstraction merely based on light absorption, thereby forming radicals.

Although the radicals formed from the polyolefin chains through the hydrogen abstraction caused by the photoinitiator allow crosslinking of the polymer chains with one another, the radicals may further generate radicals in the polyolefin chains, and thus double bond structures may remain or may be further generated in the polyolefin chains.

As a result of the photo-crosslinking caused by the photoinitiator, the double bond structures remaining in the crosslinked structure-containing polyolefin porous support having a crosslinked structure including polymer chains interconnected directly with one another become sites where various side reactions may occur. Therefore, the number of such double bonds may affect the performance of the crosslinked structure-containing polyolefin porous support.

The inventors of the present disclosure have found that the problem of side reactions can be minimized by controlling the number of double bonds present in the polyolefin chains in the crosslinked structure-containing polyolefin porous support. The present disclosure is based on this finding.

In one aspect of the present disclosure, there is provided a crosslinked structure-containing polyolefin porous support which has a number of double bonds present in the polyolefin chains of 0.01-0.6 per 1000 carbon atoms, as determined by ¹H-NMR, and includes a crosslinked structure having polymer chains interconnected directly with one another.

Herein, the expression 'crosslinked structure including polymer chains interconnected directly with one another' means a structure in which polymer chains substantially including polyolefin, preferably, including polyolefin alone, are provided with reactivity through the addition of a photoinitiator, and are crosslinked directly with one another. Therefore, crosslinking that occurs between polymer chains and an additionally introduced crosslinking agent does not correspond to 'crosslinked structure including polymer chains interconnected directly with one another' as defined herein. In addition, crosslinking that occurs between such an additional crosslinking agent and polymer chains does not correspond to 'crosslinked structure including polymer chains interconnected directly with one another' as define herein, even though the polymer chains substantially include polyolefin or include polyolefin alone.

According to an embodiment of the present disclosure, the crosslinked structure-containing polyolefin porous support may include only the crosslinked structure including polymer chains interconnected directly with one another, while not including the crosslinked structure including a polymer chain interconnected directly with a photoinitiator.

According to an embodiment of the present disclosure, the crosslinked structure-containing polyolefin porous support includes only the crosslinked structure including polymer chains interconnected directly with one another, and includes no crosslinked structure including a polymer chain interconnected directly with a photoinitiator. Such a crosslinked structure has a lower reaction enthalpy as compared to the crosslinked structure among the polymer chains in the polyolefin porous support, and may be decomposed to cause side reactions. In addition, when a photoinitiator is crosslinked with polymer chains, the melting point of the polyolefin chains is decreased to cause degradation of characteristics, such as shutdown temperature, of the polyolefin porous support. The crosslinked structure-containing polyolefin porous support according to an embodiment of the present disclosure includes only the crosslinked structure including polymer chains interconnected directly with one another, and thus can solve the above-mentioned problem.

According to an embodiment of the present disclosure, the crosslinked structure-containing polyolefin porous support may have a number of double bonds present in the polyolefin chains of 0.01-0.6 per 1000 carbon atoms, as determined by ¹H-NMR. When the crosslinked structure-containing polyolefin porous support has the above-defined number of double bonds, it is possible to minimize side reactions.

When the number of double bonds present in the polyolefin chains is larger than 0.6 per 1000 carbon atoms, side reactions may occur to cause degradation of the performance of the crosslinked structure-containing polyolefin porous support.

According to an embodiment of the present disclosure, the crosslinked structure-containing polyolefin porous support may have a number of double bonds present in the polyolefin chains of 0.02-0.5 or 0.08-0.57 per 1000 carbon atoms. When the crosslinked structure-containing polyolefin porous support has the above-defined number of double bonds, it is possible to minimize side reactions.

According to an embodiment of the present disclosure, the number of double bonds present in the polyolefin chains, except the ends, of the crosslinked structure-containing polyolefin porous support may be 0.005-0.59 per 1000 carbon atoms. Herein, 'double bonds present in the polyolefin chains, except the ends' refers to double bonds present throughout the polyolefin chains, except the ends of the polyolefin chains. In addition, the term 'end' refers to the position of carbon atom linked to each of the both terminals of the polyolefin chains.

According to an embodiment of the present disclosure, the polyolefin porous support may be a porous film.

According to an embodiment of the present disclosure, the polyolefin may include polyethylene; polypropylene; polybutylene; polypentene; polyhexene; polyoctene; a copolymer of at least two of ethylene, propylene, butene, pentene, 4-methylpentene, hexane, heptane and octene; or a mixture thereof.

Non-limiting examples of the polyethylene include low-density polyethylene (LDPE), linear low-density polyethylene (LLDPE), high-density polyethylene (HDPE), or the like. Among those, when the polyethylene is high-density polyethylene having a high crystallization degree and a high resin melting point, it is possible to provide a desired level of heat resistance and an increased modulus.

According to an embodiment of the present disclosure, the polyolefin may have a weight average molecular weight of 200,000-1,500,000, 220,000-100,000, or 250,000-800,000. When the polyolefin has the above-defined range of weight average molecular weight, it is possible to provide excellent strength and heat resistance, while ensuring the uniformity and film-forming processability of the polyolefin porous support.

Herein, the weight average molecular weight may be determined by using gel permeation chromatography (GPC) (PL GPC220, Agilent Technologies) under the following analysis conditions:
- Column: PL Olexis (Polymer Laboratories)
- Solvent: Trichlorobenzene (TCB)
- Flow rate: 1.0 mL/min
- Sample concentration: 1.0 mg/mL
- Injection amount: 200 µL
- Column temperature: 160°C
- Detector: Agilent High Temperature RI detector
- Standard: Polystyrene (corrected with tertiary function)

According to an embodiment of the present disclosure, the crosslinked structure-containing polyolefin porous support may have a crosslinking degree of 10-45%, 15-40%, 20-35%, or 32-42%. When the crosslinked structure-containing polyolefin porous support has the above-defined range of crosslinking degree, it is possible to provide an increased modulus with ease, while providing a desired level of heat resistance. For example, when the crosslinked structure-containing polyolefin porous support has a crosslinking degree of 20% or more, the crosslinked structure-containing polyolefin porous support may easily have a meltdown temperature of 170°C or higher.

Herein, the crosslinking degree is determined by dipping the crosslinked structure-containing polyolefin porous support in xylene solution at 135°C, boiling it therein for 12 hours and measuring the residual weight, according to ASTM D2765, and is calculated as a percentage of the residual weight based on the initial weight.

According to an embodiment of the present disclosure, the crosslinked structure-containing polyolefin porous support may have a thickness of 3-16 µm, or 5-12 µm. When the crosslinked structure-containing polyolefin porous support has the above-defined range of thickness, it is possible to ensure energy density, while preventing the separator from being damaged easily during the use of a battery.

Since the crosslinked structure-containing polyolefin porous support according to an embodiment of the present disclosure has a crosslinked structure including polymer chains interconnected directly with one another, it may have improved heat resistance.

The crosslinked structure-containing polyolefin porous support according to an embodiment of the present disclosure may retain substantially the same pore structure as the polyolefin porous support before crosslinking, even after crosslinking.

The crosslinked structure-containing porous support according to an embodiment of the present disclosure may be used as a crosslinked structure-containing separator for a lithium secondary battery.

The crosslinked structure-containing separator for a lithium secondary battery according to an embodiment of the present disclosure may include the crosslinked structure-containing porous support according to an embodiment of the present disclosure.

According to an embodiment of the present disclosure, when the crosslinked structure-containing polyolefin separator includes a crosslinked structure-containing polyolefin porous support having the above-defined number of double bonds, it is possible to prevent the problem of degradation of battery performance at high temperature and/or high voltage.

Since the crosslinked structure-containing separator for a lithium secondary battery according to an embodiment of the present disclosure has the above-defined number of double bonds, it is possible to minimize the problem of degradation of the performance of the battery including the separator, even when the battery is stored at high temperature.

When the crosslinked structure-containing separator for a lithium secondary battery according to an embodiment of the present disclosure has a number of double bonds present in the polyolefin chains of larger than 0.6 per 1000 carbon atoms, the battery including the separator undergoes degradation of performance, when being stored at high temperature.

The crosslinked structure-containing separator for a lithium secondary battery according to an embodiment of the present disclosure may include the crosslinked structure-containing porous support having a crosslinked structure including polymer chains interconnected directly with one another.

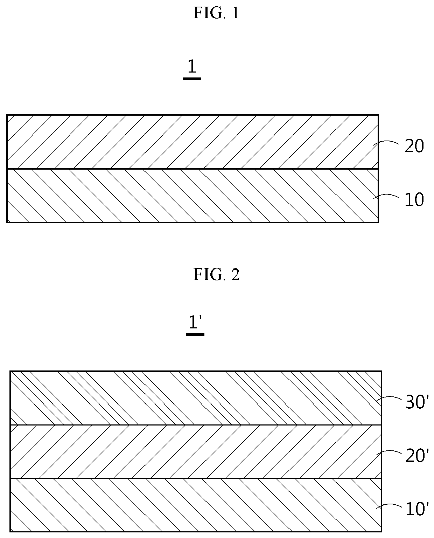

The crosslinked structure-containing separator for a lithium secondary battery according to another embodiment of the present disclosure may further include an inorganic composite porous layer disposed on at least one surface of the crosslinked structure-containing polyolefin porous support and including an inorganic filler and a binder polymer. In other words, the crosslinked structure-containing separator for a lithium secondary battery may include: a crosslinked structure-containing polyolefin porous support; and an inorganic composite porous layer disposed on at least one surface of the crosslinked structure-containing polyolefin porous support and including an inorganic filler and a binder polymer. FIG. 1 illustrates the crosslinked structure-containing separator for a lithium secondary battery according to an embodiment of the present disclosure.

Referring to FIG. 1, the crosslinked structure-containing separator 1 for a lithium secondary battery according to an embodiment of the present disclosure includes: a crosslinked structure-containing polyolefin porous support 10; and an inorganic composite porous layer 20 disposed on at least one surface of the crosslinked structure-containing polyolefin porous support 10 and including an inorganic filler and a binder polymer.

The inorganic composite porous layer 20 may be formed on one surface or both surfaces of the crosslinked structure-containing polyolefin porous support 10. The inorganic composite porous layer 20 includes a binder polymer which attaches the inorganic filler particles to one another so that they may retain their binding states (i.e. the binder polymer interconnects and fixes the inorganic filler particles), and the inorganic filler may be bound to the crosslinked structure-containing polyolefin porous support 10 by the binder polymer. The inorganic composite porous layer 20 prevents the crosslinked structure-containing polyolefin porous support 10 from undergoing a severe heat shrinking behavior at high temperature by virtue of the inorganic filler to improve the safety of the separator. For example, the separator may show a heat shrinkage of 20% or less, 2-15%, or 2~10% in each of the machine direction and the transverse direction, as determined after allowing the separator to stand at 120°C for 30 minutes.

There is no particular limitation in the inorganic filler, as long as it is electrochemically stable. In other words, there is no particular limitation in the inorganic filler, as long as it causes no oxidation and/or reduction in the range (e.g. 0-5 V based on Li/Li⁺) of operating voltage of an applicable electrochemical device. Particularly, when using an inorganic filler having a high dielectric constant, it is possible to improve the ion conductivity of an electrolyte by increasing the dissociation degree of an electrolyte salt, such as a lithium salt, in a liquid electrolyte.

For the above-mentioned reasons, according to an embodiment of the present disclosure, the inorganic filler may be an inorganic filler having a high dielectric constant of 5 or more, or 10 or more. Non-limiting examples of the inorganic filler having a dielectric constant of 5 or more may include any one selected from the group consisting of BaTiO₃, Pb(Zr,Ti)O₃ (PZT), Pb₁₋ₓLaₓZr_{1-y}Ti_{y}O₃ (PLZT, wherein 0 < x < 1, 0 < y < 1), Pb(Mg_{1/3}Nb_{2/3})O₃-PbTiO₃ (PMN-PT), hafnia (HfO₂), SrTiO₃, SnO₂, CeO₂, MgO, Mg(OH)₂, NiO, CaO, ZnO, ZrO₂, SiO₂, Y₂O₃, Al₂O₃, AlOOH, Al(OH)₃, SiC, TiO₂, or a mixture thereof.

According to another embodiment of the present disclosure, the inorganic filler may be an inorganic filler having lithium-ion transportability, i.e. inorganic filler containing lithium elements and capable of transporting lithium ions, while not storing lithium. Non-limiting examples of the inorganic filler having lithium-ion transportability include lithium phosphate (Li₃PO₄), lithium titanium phosphate (LiₓTi_{y}(PO₄)₃, 0 < x < 2, 0 < y < 3), lithium aluminum titanium phosphate (LiₓAl_{y}Ti_{z}(PO₄)₃, 0 < x < 2, 0 < y < 1, 0 < z < 3), (LiAlTiP)ₓO_{y}-based glass (1 < x < 4, 0 < y < 13), such as 14Li₂O-9Al₂O₃-38TiO₂-39P₂O₅, lithium lanthanum titanate (LiₓLa_{y}TiO₃, 0 < x < 2, 0 < y < 3), lithium germanium thiophosphate (LiₓGe_{y}P_{z}S_{w}, 0 < x < 4, 0 < y < 1, 0 < z < 1, 0 < w < 5), such as Li_{3.25}Ge_{0.25}P_{0.75}S₄, lithium nitride (LiₓN_{y}, 0 < x < 4, 0 < y < 2), such as Li₃N, SiS₂-based glass (LiₓSi_{y}S_{z}, 0 < x < 3, 0 < y < 2, 0 < z < 4), such as Li₃PO₄-Li₂S-SiS₂, and P₂S₅-based glass (LiₓP_{y}S_{z}, 0 < x < 3, 0 < y < 3, 0 < z < 7) , such as LiILi₂S-P₂S₅, or a mixture thereof.

According to an embodiment of the present disclosure, the inorganic filler may have an average particle diameter of 0.01-1.5 µm. When the inorganic filler has the above-defined range of average particle diameter, it is possible to form an inorganic composite porous layer 20 having a uniform thickness and suitable porosity and to provide high dispersibility of inorganic filler and desired energy density.

Herein, the average particle diameter of the inorganic filler means D₅₀ particle diameter, and "D₅₀" means the particle diameter at the point of 50% in the particle number accumulated distribution as a function of particle diameter. The particle diameter may be determined by using the laser diffraction method. Particularly, a powder to be analyzed is dispersed in a dispersion medium and introduced to a commercially available laser diffraction particle size analyzer (e.g. Microtrac S3500) to measure a difference in diffraction pattern depending on particle size, when the particles pass through laser beams, and then particle size distribution can be calculated. Then, D₅₀ may be determined by calculating the particle diameter at the point of 50% in the particle number accumulated distribution depending on particle diameter in the analyzer system.

The binder polymer may have a glass transition temperature (T_{g}) of -200 to 200°C. When the binder polymer satisfies the above-defined range of glass transition temperature, it can provide the finished inorganic composite porous layer with improved mechanical properties, such as flexibility and elasticity. The binder polymer may have ion conductivity. When the binder polymer has ion conductivity, it is possible to further improve the performance of a battery. The binder polymer may have a dielectric constant ranging from 1.0 to 100 (measured at a frequency of 1 kHz), or from 10 to 100. When the binder polymer has the above-defined range of dielectric constant, it is possible to improve the salt dissociation degree in an electrolyte.

According to an embodiment of the present disclosure, the binder polymer may include poly(vinylidene fluoride-co-hexafluoropropylene), poly(vinylidene fluoride-co-chlorotrifluoroethylene), poly(vinylidene fluoride-co-tetrafluoroethylene), poly(vinylidene fluoride-co-trichloroethylene), acrylic copolymer, styrene-butadiene copolymer, poly(acrylic acid), poly(methyl methacrylate), poly(butyl acrylate), poly(acrylonitrile), poly(vinyl pyrrolidone), poly(vinyl alcohol), poly(vinyl acetate), poly(ethylene-co-vinyl acetate), poly(ethylene oxide), poly(arylate), cellulose acetate, cellulose acetate butyrate, cellulose acetate propionate, cyanoethylpullulan, cyanoethylpolyvinylalchol, cyanoethyl cellulose, cyanoethyl sucrose, pullulan, carboxymethyl cellulose, or two or more of them.

The acrylic copolymer may include, but is not limited to: ethyl acrylate-acrylic acid-N,N-dimethyl acrylamide copolymer, ethyl acrylate-acrylic acid-2-(dimethylamino)ethyl acrylate copolymer, ethyl acrylate-acrylic acid-N,N-diethylacrylamide copolymer, ethyl acrylate-acrylic acid-2-(diethylamino)ethyl acrylate copolymer, or two or more of them.

According to an embodiment of the present disclosure, the weight ratio of the inorganic filler to the binder polymer is determined considering the thickness, pore size and porosity of the finished inorganic composite porous layer 20, and may be 50:50-99.9:0.1, or 60:40-99.5:0.5. When the weight ratio of the inorganic filler to the binder polymer satisfies the above-defined range, it is possible to ensure vacant spaces formed among the inorganic filler particles sufficiently, and thus to ensure the pore size and porosity of the inorganic composite porous layer 20 with ease. **In** addition, it is possible to ensure the adhesion among the inorganic filler particles with ease.

According to an embodiment of the present disclosure, the inorganic composite porous layer 20 may further include additives, such as a dispersant and/or a thickener. According to an embodiment of the present disclosure, the additives may include polyvinyl pyrrolidone (PVP), hydroxyethyl cellulose (HEC), hydroxypropyl cellulose (HPC), ethylhydroxyethyl cellulose (EHEC), methyl cellulose (MC), carboxymethyl cellulose (CMC), hydroxyalkylmethyl cellulose, cyanoethylene polyvinyl alcohol, or two or more of them.

According to an embodiment of the present disclosure, the inorganic composite porous layer 20 may have a structure in which the inorganic filler particles are bound to one another by the binder polymer, while they are packed in contact with one another. In this manner, interstitial volumes are formed among the inorganic filler particles, and the interstitial volumes become vacant spaces to form pores.

According to another embodiment of the present disclosure, the inorganic composite porous layer 20 may have a structure including: a plurality of nodes including an inorganic filler, and a binder polymer at least partially covering the surface of the inorganic filler; and at least one filament formed from the binder polymer of the nodes in a thread-like shape, wherein the filament has a node-linking portion extended from one node for linking with another node, and the node-linking portion forms a three-dimensional network structure through the filaments derived from the binder polymer and crossing one another.

According to an embodiment of the present disclosure, the inorganic composite porous layer 20 may have an average pore size of 0.001010 µm. The average pore size of the inorganic composite porous layer 20 may be determined by using the capillary flow porometry. The capillary flow porometry measures the diameter of the smallest pore in the thickness direction. Therefore, in order to determine the average pore size of the inorganic composite porous layer 20 alone by the capillary flow porometry, it is required to separate the inorganic composite porous layer 20 from the crosslinked structure-containing polyolefin porous support 10, and to surround the separated inorganic composite porous layer 20 with a non-woven web capable of supporting the same. Herein, the non-woven web should have a significantly larger pore size as compare to the pore size of the inorganic composite porous layer 20.

According to an embodiment of the present disclosure, the inorganic composite porous layer 20 may have a porosity of 5-95%, 10-95%, 20-90%, or 30-80%. The porosity corresponds to a value obtained by subtracting the volume expressed from the weight and density of each ingredient in the inorganic composite porous coating layer 20, from the volume calculated from the thickness, width and length of the inorganic composite porous coating layer 20.

The porosity of the inorganic composite porous layer 20 may be determined from scanning electron microscopic (SEM) images, by using a mercury porosimeter, or through the BET 6-point method based on nitrogen gas adsorption flow using a porosimetry analyzer (e.g. Belsorp-II mini, Bell Japan Inc.).

According to an embodiment of the present disclosure, the inorganic composite porous layer 20 may have a thickness of 1.5-5.0 µm on one surface of the crosslinked structure-containing polyolefin porous support 10. When the thickness of the inorganic composite porous layer 20 satisfies the above-defined range, it is possible to provide high adhesion to an electrode and increased cell strength of a battery.

The crosslinked structure-containing separator for a lithium secondary battery according to still another embodiment of the present disclosure may further include: an inorganic composite porous layer disposed on at least one surface of a crosslinked structure-containing polyolefin porous support and containing an inorganic filler and a first binder polymer; and a porous adhesive layer disposed on the inorganic composite porous layer and containing a second binder polymer. **In** other words, the crosslinked structure-containing separator for a lithium secondary battery may include: a crosslinked structure-containing polyolefin porous support; an inorganic composite porous layer disposed on at least one surface of the crosslinked structure-containing polyolefin porous support and containing an inorganic filler and a first binder polymer; and a porous adhesive layer disposed on the inorganic composite porous layer and containing a second binder polymer. FIG. 2 illustrates the crosslinked structure-containing separator for a lithium secondary battery according to another embodiment of the present disclosure.

Referring to FIG. 2, the crosslinked structure-containing separator 1' for a lithium secondary battery according to another embodiment of the present disclosure includes: a crosslinked structure-containing polyolefin porous support 10' having a crosslinked structure including polymer chains interconnected directly with one another; an inorganic composite porous layer 20' disposed on at least one surface of the crosslinked structure-containing polyolefin porous support 10' and including an inorganic filler and a first binder polymer; and a porous adhesive layer 30' disposed on the inorganic composite porous layer 20' and including a second binder polymer.

The inorganic composite porous layer 20' may be formed on one surface or both surfaces of the crosslinked structure-containing polyolefin porous support 10'. The inorganic composite porous layer 20' includes an inorganic filler, and a first binder polymer which attaches the inorganic filler particles to one another so that they may retain their binding states (i.e. the first binder polymer interconnects and fixes the inorganic filler particles), and the inorganic filler may be bound to the crosslinked structure-containing polyolefin porous support 10' by the first binder polymer. The inorganic composite porous layer 20' prevents the crosslinked structure-containing polyolefin porous support 10' from undergoing a severe heat shrinking behavior at high temperature by virtue of the inorganic filler to improve the safety of the separator. For example, the separator may show a heat shrinkage of 20% or less, 2-15%, or 2-10% in each of the machine direction and the transverse direction, as determined after allowing the separator to stand at 150°C for 30 minutes.

Reference will be made to the above description about the inorganic filler.

The first binder polymer may have a glass transition temperature (T_{g}) of -200 to 200°C. When the first binder polymer satisfies the above-defined range of glass transition temperature, it can provide the finished inorganic composite porous layer 20' with improved mechanical properties, such as flexibility and elasticity. The first binder polymer may have ion conductivity. When the first binder polymer has ion conductivity, it is possible to further improve the performance of a battery. The first binder polymer may have a dielectric constant ranging from 1.0 to 100 (measured at a frequency of 1 kHz), or from 10 to 100. When the first binder polymer has the above-defined range of dielectric constant, it is possible to improve the salt dissociation degree in an electrolyte.

According to an embodiment of the present disclosure, the first binder polymer may be a binder polymer having excellent heat resistance. When the first binder polymer has excellent heat resistance, the inorganic composite porous layer may have further improved heat resistance. For example, the separator may show a heat shrinkage of 20% or less, 2-15%, 2-10%, 2-5%, 0-5%, or 0-2% in each of the machine direction and the transverse direction, as determined after allowing the separator to stand at 150°C for 30 minutes.

According to an embodiment of the present disclosure, the first binder polymer may include acrylic polymer, polyacrylic acid, styrene butadiene rubber, polyvinyl alcohol, or two or more of them.

Particularly, the acrylic polymer may include acrylic homopolymer prepared by polymerizing acrylic monomers alone, or copolymers of acrylic monomers with another monomers. For example, the acrylic polymer may include copolymer of ethylhexyl acrylate with methyl methacrylate, polymethyl methacrylate, polyethylhexyl acrylate, polybutyl acrylate, polyacrylonitrile, copolymer of butyl acrylate with methyl methacrylate, or two or more of them.

According to an embodiment of the present disclosure, the first binder polymer may be a particle-shaped binder polymer.

According to an embodiment of the present disclosure, the weight ratio of the inorganic filler to the first binder polymer may be 95:5-99.9:0.1, 96:4-99.5:0.5, or 97:3-99:1. When the weight ratio of the inorganic filler to the first binder polymer falls within the above-defined range, a large amount of inorganic filler is distributed per unit area of the separator to provide the separator with improved thermal safety. For example, the separator may show a heat shrinkage of 20% or less, 2-15%, 2-10%, 2-5%, 0-5%, or 0-2% in each of the machine direction and the transverse direction, as determined after allowing the separator to stand at 150°C for 30 minutes. In addition, it is possible to sufficiently ensure vacant spaces formed among the inorganic filler particles, while ensuring sufficient adhesion among the inorganic filler particles.

Hereinafter, the inorganic composite porous layer 20' will be explained merely about the characteristics different from the above-mentioned inorganic composite porous layer 20.

According to an embodiment of the present disclosure, the inorganic composite porous layer may have a structure in which the inorganic filler particles are bound to one another by the first binder polymer, while they are packed in contact with one another. In this manner, interstitial volumes are formed among the inorganic filler particles, and the interstitial volumes become vacant spaces to form pores.

The porous adhesive layer 30' includes a second binder polymer so that the separator including the inorganic composite porous layer 20' may ensure adhesion to an electrode. In addition, the porous adhesive layer 30' have pores formed therein to prevent an increase in resistance of the separator.

According to an embodiment of the present disclosure, the second binder polymer in the porous adhesive layer 30' cannot infiltrate to the surface and/or inner part of the crosslinked structure-containing polyolefin porous support 10' to minimize an increase in resistance of the separator.

The second binder polymer may be a binder polymer used conventionally for forming an adhesive layer. The second binder polymer may have a glass transition temperature (T_{g}) of -200 to 200°C. When the second binder polymer satisfies the above-defined range of glass transition temperature, it can provide the finished adhesive layer with improved mechanical properties, such as flexibility and elasticity. The second binder polymer may have ion conductivity. When the second binder polymer has ion conductivity, it is possible to further improve the performance of a battery. The second binder polymer may have a dielectric constant ranging from 1.0 to 100 (measured at a frequency of 1 kHz), or from 10 to 100. When the second binder polymer has the above-defined range of dielectric constant, it is possible to improve the salt dissociation degree in an electrolyte.

According to an embodiment of the present disclosure, the second binder polymer may include poly(vinylidene fluoride), poly(vinylidene fluoride-co-hexafluoropropylene), poly(vinylidene fluoride-co-trichloroethylene), poly(vinylidene fluoride-co-tetrafluoroethylene), poly(vinylidene fluoride-co-trifluoroethylene), poly(methyl methacrylate), poly(ethylhexyl acrylate), poly(butyl acrylate), poly(acrylonitrile), poly(vinyl pyrrolidone), poly(vinyl acetate), poly(ethylhexyl acrylate-co-methyl methacrylate), poly(ethylene-co-vinyl acetate), polyethylene oxide, poly(arylate), or two or more of them.

According to an embodiment of the present disclosure, the porous adhesive layer 30' may have a pattern including at least one adhesive region containing the second binder polymer, and at least one non-coated region where no adhesive region is formed. The pattern may have a dot-like, stripe-like, diagonal, waved, triangular, quadrangular or semicircular shape. When the porous adhesive layer has such a pattern, the separator is improved in terms of resistance, and the non-coated region having no porous adhesive layer allows wetting with an electrolyte to provide the separator with improved electrolyte wettability.

According to an embodiment of the present disclosure, the porous adhesive layer 30' may have a thickness of 0.5-1.5 µm, 0.6-1.2 µm, or 0.6-1.0 µm. When the thickness of the porous adhesive layer falls within the above-defined range, it is possible to provide excellent adhesion to an electrode, resulting in an increase in cell strength of a battery. In addition, such a thickness is favorable in terms of the cycle characteristics and resistance characteristics of a battery.

Since the crosslinked structure-containing separator for a lithium secondary battery according to an embodiment of the present disclosure includes the crosslinked structure-containing polyolefin porous support including polymer chains interconnected directly with one another, it shows excellent high-temperature safety. In addition, since the number of double bonds present in the polyolefin chains is 0.01-0.6 per 1000 carbon atoms, as determined by ¹H-NMR, it is possible to prevent side reactions. For example, after storing the lithium secondary battery including the crosslinked structure-containing separator for a lithium secondary battery at high temperature, such as about 60°C, it is possible to minimize degradation of the performance of the battery.

The crosslinked structure-containing separator for a lithium secondary battery according to an embodiment of the present disclosure may have an increased meltdown temperature as compared to a separator including a non-crosslinked polyolefin porous support. For example, the crosslinked structure-containing separator for a lithium secondary battery may have a meltdown temperature of 160°C or higher, 170°C or higher, or 180-230°C.

As used herein, the term 'separator including a non-crosslinked polyolefin porous support' refers to: a separator including a non-crosslinked and crosslinked structure-free polyolefin porous support; a separator including a non-crosslinked and crosslinked structure-free polyolefin porous support, and an inorganic composite porous layer disposed on at least one surface of the crosslinked structure-free polyolefin porous support, and containing an inorganic filler and a binder polymer; or a separator including a non-crosslinked and crosslinked structure-free polyolefin porous support, an inorganic composite porous layer disposed on at least one surface of the crosslinked structure-free polyolefin porous support and containing an inorganic filler and a first binder polymer, and a porous adhesive layer disposed on the inorganic composite porous layer and containing a second binder polymer.

The meltdown temperature may be determined through thermomechanical analysis (TMA). For example, a sample is taken in each of the machine direction and the transverse direction, and then the sample having a size of width 4.8 mm x length 8 mm is introduced to a TMA instrument (Q400, available from TA Instrument). Then, while a tension of 0.01 N is applied to the sample, the sample is heated to a temperature from 30°C to 220°C at a heating rate of 5°C/min, and the temperature where the sample undergoes a rapid increase in length and the sample is broken may be determined as the meltdown temperature.

The crosslinked structure-containing separator for a lithium secondary battery according to an embodiment of the present disclosure may not undergo a significant increase in shutdown temperature, as compared to a separator including a non-crosslinked polyolefin porous support and may also show a small change in shutdown temperature. The crosslinked structure-containing separator for a lithium secondary battery according to an embodiment of the present disclosure may undergo an increase in meltdown temperature but may not undergo a significant increase in shutdown temperature, as compared to a separator including a non-crosslinked polyolefin porous support. Therefore, it is possible to enhance the high-temperature safety of the separator, while ensuring overcharge safety by virtue of the shutdown temperature.

According to an embodiment of the present disclosure, the crosslinked structure-containing separator for a lithium secondary battery may have a shutdown temperature of 145°C or less, 140°C or less, or 133-140°C. When the shutdown temperature of the separator satisfies the above-defined range, it is possible to ensure overcharge safety, to prevent the pores of the crosslinked structure-containing polyolefin porous support from being damaged during a high-temperature/pressurization step and thus to prevent the problem of an increase in resistance.

The shutdown temperature may be determined by measuring the time (sec) required for 100 cc of air to pass through a separator under a constant pressure of 0.05 MPa, when the separator is heated at a rate of 5°C/min, by using an air permeability tester, and determining a temperature where the separator undergoes a rapid increase in air permeability.

The crosslinked structure-containing separator for a lithium secondary battery according to an embodiment of the present disclosure may not undergo significant degradation of air permeability, weight per unit area, tensile strength, tensile elongation, puncture strength, electrical resistance, or the like, as compared to the air permeability, weight per unit area, tensile strength, tensile elongation, puncture strength, electrical resistance, or the like, of the separator for a lithium secondary battery before crosslinking, and also shows a small change in those properties.

The crosslinked structure-containing separator for a lithium secondary battery according to an embodiment of the present disclosure may show a change in air permeability of 10% or less, 0-10%, 0-5%, or 0-3%, as compared to the separator for a lithium secondary battery before crosslinking.

The change in air permeability may be calculated according to the following formula: 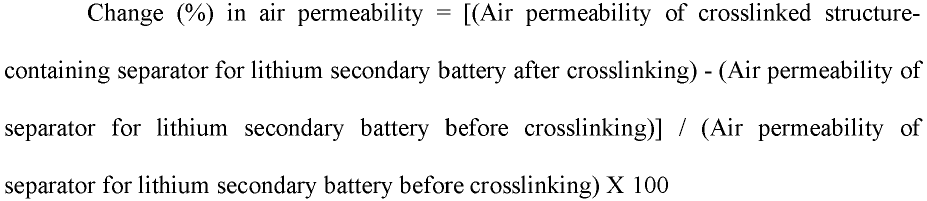 Change (%) in air permeability = [(Air permeability of crosslinked structure-containing separator for lithium secondary battery after crosslinking) - (Air permeability of separator for lithium secondary battery before crosslinking)] / (Air permeability of separator for lithium secondary battery before crosslinking) X 100

As used herein, the term 'crosslinked structure-containing separator for a lithium secondary battery after crosslinking' refers to: a separator including a crosslinked structure-containing polyolefin porous support; a separator including a crosslinked structure-containing polyolefin porous support, and an inorganic composite porous layer disposed on at least one surface of the crosslinked structure-containing polyolefin porous support and containing an inorganic filler and a binder polymer; or a separator including a crosslinked structure-containing polyolefin porous support, an inorganic composite porous layer disposed on at least one surface of the crosslinked structure-containing polyolefin porous support and containing an inorganic filler and a first binder polymer, and a porous adhesive layer disposed on the top surface of the inorganic composite porous layer and containing a second binder polymer.

The air permeability (Gurley) may be determined according to ASTM D726-94. Herein, Gurley refers to resistance against air flow and is determined by a Gurley densometer. The air permeability value described herein is expressed by the time (seconds), i.e. air permeation time, required for 100 cc or air to pass through a section of porous support sample having an area of 1 in² under a pressure of 12.2 in H₂O.

The crosslinked structure-containing separator for a lithium secondary battery according to an embodiment of the present disclosure may show a change in weight per unit area of 5% or less, or 0-5%, as compared to the separator for a lithium secondary battery before crosslinking.

The change in weight per unit area may be calculated according to the following formula: 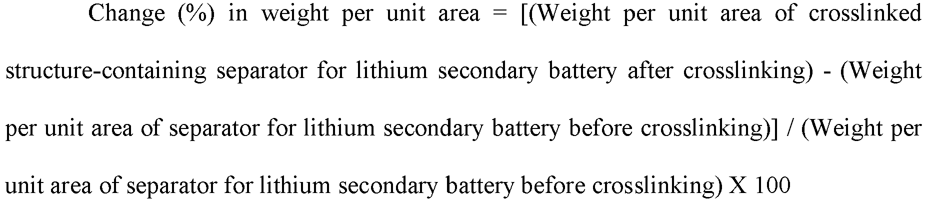 Change (%) in weight per unit area = [(Weight per unit area of crosslinked structure-containing separator for lithium secondary battery after crosslinking) - (Weight per unit area of separator for lithium secondary battery before crosslinking)] / (Weight per unit area of separator for lithium secondary battery before crosslinking) X 100

The weight per unit area (g/m²) is determined by preparing a sample having a width of 1 m and a length of 1 m and measuring the weight of the sample.

The crosslinked structure-containing separator for a lithium secondary battery according to an embodiment of the present disclosure shows a change in tensile strength of 20% or less, 0-20%, 0-10%, 0-9%, 0-8%, or 0-7.53%, in each of the machine direction and the transverse direction, as compared to the separator a lithium secondary battery before crosslinking.

The change in tensile strength may be calculated according to the following formula: 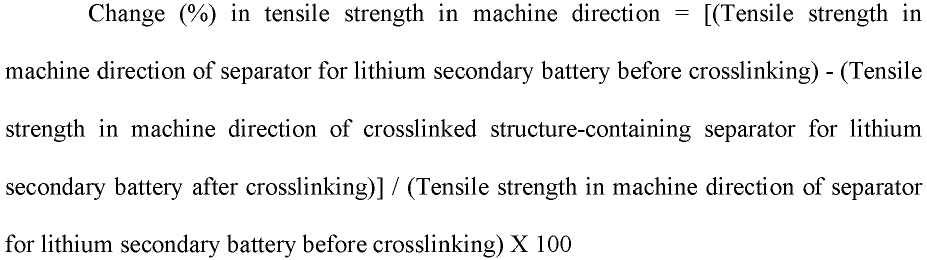 Change (%) in tensile strength in machine direction = [(Tensile strength in machine direction of separator for lithium secondary battery before crosslinking) - (Tensile strength in machine direction of crosslinked structure-containing separator for lithium secondary battery after crosslinking)] / (Tensile strength in machine direction of separator for lithium secondary battery before crosslinking) X 100 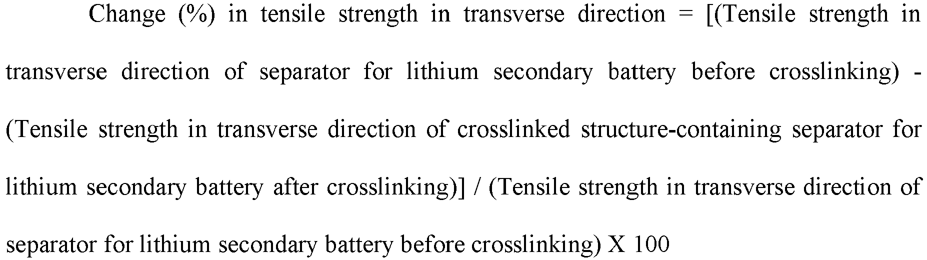 Change (%) in tensile strength in transverse direction = [(Tensile strength in transverse direction of separator for lithium secondary battery before crosslinking) - (Tensile strength in transverse direction of crosslinked structure-containing separator for lithium secondary battery after crosslinking)] / (Tensile strength in transverse direction of separator for lithium secondary battery before crosslinking) X 100

The tensile strength refers to the strength of a specimen at the point of breaking, when the specimen is drawn in each of the machine direction and the transverse direction at a rate of 50 mm/min by using Universal Testing Systems (Instron^{®} 3345) according to ASTM D882.

The crosslinked structure-containing separator for a lithium secondary battery according to an embodiment of the present disclosure may show a change in tensile elongation of 20% or less, or 0-20% in each of the machine direction and the transverse direction, as compared to the separator for a lithium secondary battery before crosslinking.

The change in tensile elongation may be calculated according to the following formula: 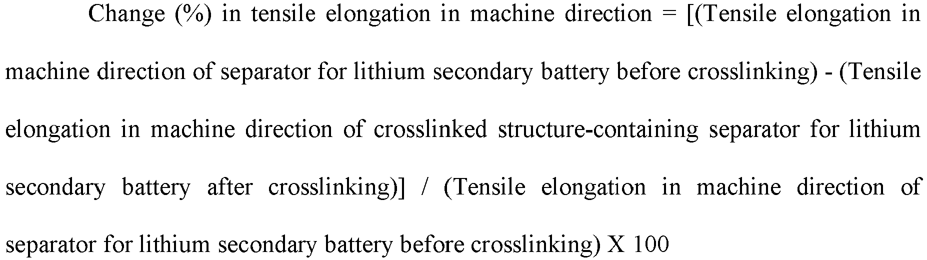 Change (%) in tensile elongation in machine direction = [(Tensile elongation in machine direction of separator for lithium secondary battery before crosslinking) - (Tensile elongation in machine direction of crosslinked structure-containing separator for lithium secondary battery after crosslinking)] / (Tensile elongation in machine direction of separator for lithium secondary battery before crosslinking) X 100 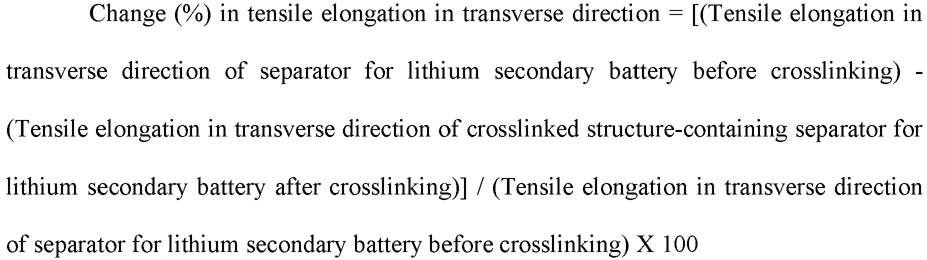 Change (%) in tensile elongation in transverse direction = [(Tensile elongation in transverse direction of separator for lithium secondary battery before crosslinking) - (Tensile elongation in transverse direction of crosslinked structure-containing separator for lithium secondary battery after crosslinking)] / (Tensile elongation in transverse direction of separator for lithium secondary battery before crosslinking) X 100

The tensile elongation can be calculated according to the following formula, after the specimen is drawn in each of the machine direction and the transverse direction at a rate of 50 mm/min by using Universal Testing Systems (Instron^{®} 3345) according to ASTM D882, and the maximum length of the specimen elongated until the specimen is broken is measured. 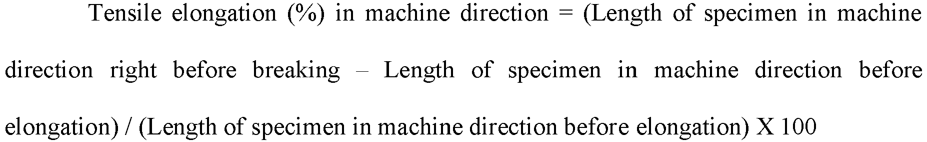 Tensile elongation (%) in machine direction = (Length of specimen in machine direction right before breaking - Length of specimen in machine direction before elongation) / (Length of specimen in machine direction before elongation) X 100 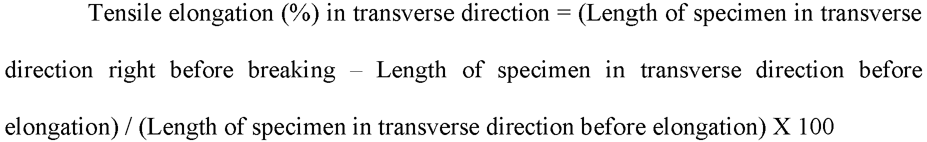 Tensile elongation (%) in transverse direction = (Length of specimen in transverse direction right before breaking - Length of specimen in transverse direction before elongation) / (Length of specimen in transverse direction before elongation) X 100

The crosslinked structure-containing separator for a lithium secondary battery according to an embodiment of the present disclosure may show a change in puncture strength of 10% or less, 0.5-10%, 1-9%, or 1.18-8.71%, as compared to the separator a lithium secondary battery before crosslinking.

Herein, the change in puncture strength may be calculated according to the following formula. 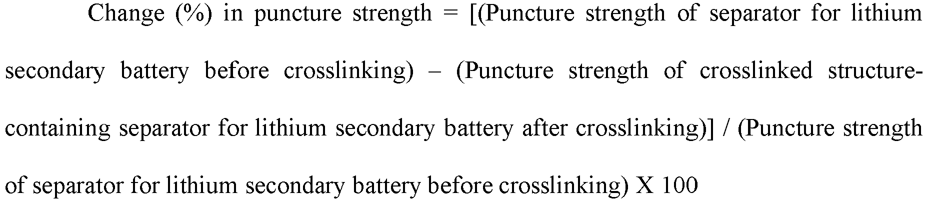 Change (%) in puncture strength = [(Puncture strength of separator for lithium secondary battery before crosslinking) - (Puncture strength of crosslinked structure-containing separator for lithium secondary battery after crosslinking)] / (Puncture strength of separator for lithium secondary battery before crosslinking) X 100

According to an embodiment of the present disclosure, the puncture strength may be determined according to ASTM D2582. Particularly, after setting a round tip with a diameter of 1 mm to operate at a rate of 120 mm/min, the puncture strength may be determined according to ASTM D2582.

The crosslinked structure-containing separator for a lithium secondary battery according to an embodiment of the present disclosure may show a change in electrical resistance of 15% or less, 2-10%, or 2-5%, as compared to the separator a lithium secondary battery before crosslinking.

Herein, the change in electrical resistance may be calculated according to the following formula. 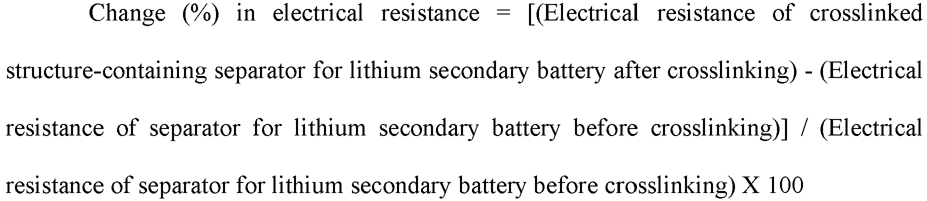 Change (%) in electrical resistance = [(Electrical resistance of crosslinked structure-containing separator for lithium secondary battery after crosslinking) - (Electrical resistance of separator for lithium secondary battery before crosslinking)] / (Electrical resistance of separator for lithium secondary battery before crosslinking) X 100

The electrical resistance may be determined by allowing a coin cell manufactured by using a separator sample to stand at room temperature for 1 day and measuring the resistance of the separator through impedance analysis.

In another aspect of the present disclosure, there is provided a method for manufacturing a crosslinked structure-containing separator for a lithium secondary battery, including the steps of:
preparing a polyolefin porous support including a photoinitiator and having a number of double bonds present in the polyolefin chains of 0.01-0.5 per 1000 carbon atoms, as determined by ¹H-NMR; and
irradiating ultraviolet rays to the polyolefin porous support,
wherein the content of the photoinitiator is 0.015-0.36 parts by weight based on 100 parts by weight of the polyolefin porous support.

Hereinafter, the method for manufacturing a crosslinked structure-containing separator for a lithium secondary battery according to an embodiment of the present disclosure will be explained with reference to the main parts thereof.

First, prepared is a polyolefin porous support including a photoinitiator and having a number of double bonds present in the polyolefin chains of 0.01-0.5 per 1000 carbon atoms, as determined by ¹H-NMR.

According to the present disclosure, the photoinitiator is introduced to the surface of the polyolefin porous support, and the polyolefin porous support may be crosslinked upon the irradiation with UV rays. Herein, the term 'surface of a polyolefin porous support' may include not only the outermost surface of the polyolefin porous support but also the surfaces of the pores present inside of the polyolefin porous support.

The photoinitiator performs direct photo-crosslinking of the polymer chains in the polyolefin porous support. The photoinitiator alone may perform the crosslinking of the polyolefin porous support with no aid of another crosslinking agent, co-initiator or synergist. The photoinitiator is converted into a reactive compound, while hydrogen atoms are removed through hydrogen abstraction merely by light absorption. Then, the photoinitiator forms radicals in the polymer chains in the polyolefin porous support, and makes the polymer chains reactive, thereby allowing the polymer chains to be interconnected directly with one another to perform photo-crosslinking.

The method for manufacturing a crosslinked structure-containing separator for a lithium secondary battery according to an embodiment of the present disclosure uses the photoinitiator to generate radicals in the polymer chains in the polyolefin porous support, thereby forming a crosslinked structure in which the polymer chains are interconnected directly with one another.

Since the photoinitiator functions to form radicals in the polymer chains in the polyolefin porous support, the content of the photoinitiator plays an important role in formation of radicals.

When radicals are formed excessively, the photoinitiators may be crosslinked among themselves or the photoinitiator may be crosslinked with the polymer chains. Such a crosslinked structure has a lower reaction enthalpy as compared to the crosslinked structure among the polymer chains in the polyolefin porous support, and may be decomposed during the charge/discharge of a battery to cause side reactions. In addition, when the photoinitiator is crosslinked with the polymer chains, the melting point of the polyolefin chains is decreased undesirably to cause degradation of characteristics, such as shutdown temperature, of the separator.

According to the present disclosure, the content of the photoinitiator is controlled to minimize side reactions occurring when crosslinking the polyolefin porous support. According to an embodiment of the present disclosure, the content of the photoinitiator may be 0.015-0.36 parts by weight based on 100 parts by weight of the polyolefin porous support. When the content of the photoinitiator satisfies the above-defined range, it is possible to prevent generation of side reactions caused by excessive formation of radicals, while allowing effective crosslinking of the polyolefin porous support. For example, only the polymer chains may be crosslinked with one another, while avoiding the crosslinking of the photoinitiators among themselves or the crosslinking between the photoinitiator and the polymer chains, caused by excessive formation of radicals. In this manner, it is possible to prevent side reactions.

It is also possible to prevent the separator from shrinking due to rapid crosslinking caused by excessive formation of radicals. Therefore, it is possible to prevent a decrease in air permeability of the polyolefin porous support after crosslinking.

Further, it is possible to prevent excessive main chain scission of the polyolefin and degradation of the mechanical strength of the polyolefin porous support.

When the content of the photoinitiator is less than 0.015 parts by weight based on 100 parts by weight of the polyolefin porous support, it is difficult to form radicals to such a degree that the polyolefin porous support may be crosslinked sufficiently. Therefore, it is difficult to perform the crosslinking of the polyolefin porous support smoothly.

When the content of the photoinitiator is larger than 0.36 parts by weight based on 100 parts by weight of the polyolefin porous support, the polyolefin porous support may be crosslinked, but radicals are formed excessively to cause side reactions. For example, the photoinitiators may be crosslinked among themselves, or the photoinitiator may be crosslinked with the polyolefin chains. In addition, crosslinking occurs rapidly upon the irradiation of UV rays to cause shrinking of the separator, and main chain scission of the polyolefin occurs to cause degradation of mechanical strength.

According to an embodiment of the present disclosure, the content of the photoinitiator may be 0.015-0.3 parts by weight, 0.015-0.09 parts by weight, 0.015-0.07 parts by weight, or 0.018-0.0365 parts by weight, based on 100 parts by weight of the polyolefin porous support. When the content of the photoinitiator satisfies the above-defined range, it is possible to prevent generation of side reactions caused by excessive formation of radicals, while allowing effective crosslinking of the polyolefin porous support.

The content of the photoinitiator based on 100 parts by weight of the polyolefin porous support, may be determined by measuring the content of the photoinitiator with which the total volume of the polyolefin porous support is filled. For example, assuming the total pore volume of the polyolefin porous support is filled with the solvent described hereinafter to 100% and no solvent for the second binder polymer is present on the surface of the polyolefin porous support, the weight of the solvent contained in the total pore volume of the polyolefin porous support may be calculated from the density of the solvent, and the content of the photoinitiator based on 100 parts by weight of the polyolefin porous support may be calculated from the content of the photoinitiator contained in the solvent.

According to an embodiment of the present disclosure, the photoinitiator may include a Type 2 photoinitiator.

According to an embodiment of the present disclosure, the photoinitiator may include thioxanthone (TX), a thioxanthone derivative, benzophenone (BPO), a benzophenone derivative, or two or more of them.

Particular examples of the thioxanthone derivative may include, but are not limited to: 2-isopropylthioxanthone, 2-chlorothioxanthone, 2-dodecylthioxanthone, 2,4-diethylthioxanthone, 2,4-dimethylthioxanthone, 1-methoxycarbonylthioxanthone, 2-ethoxycarbonylthioxanthone, 3-(2-methoxyethoxycarbonyl)-thioxanthone, 4-butoxycarbonyl-thioxanthone, 3-butoxycarbonyl-7-methylthioxanthone, 1-cyano-3-chlorothioxanthone, 1-ethoxycarbonyl-3-chlorothioxanthone, 1-ethoxycarbonyl-3-ethoxythioxanthone, 1-ethoxycarbonyl-3-aminothioxanthone, 1-ethoxycarbonyl-3-phenylsulfurylthioxanthone, 3,4-di[2-(2-methoxyethyoxy)ethoxycarbonyl]thioxanthone, 1-ethoxycarbonyl-3-(1-methyl-1-morpholinoethyl)-thioxanthone, 2-methyl-6-dimethoxymethyl-thioxanthone, 2-methyl-6-(1,1-dimethoxy-benzyl)-thioxanthone, 2-morpholinomethylthioxanthone, 2-methyl-6-morpholinomethyl-thioxanthone, N-allylthioxanthone-3,4-dicarboximide, N-octylthioxanthone-3,4-dicarboximide, N-(1,1,3,3-tetramethylbutyl)-thioxanthone-3,4,-dicarboximide, 1-phenoxythioxanthone, 6-ethoxycarbonyl-2-methoxythioxanthone, 6-ethoxycarbonyl-2-methylthioxanthone, thioxanthone-2-polyethylene glycol ester, 2-hydroxy-3-(3,4-dimethyl-9-oxo-9H-thioxanthone-2-yloxy)-N,N,N-trimethyl-1-propanaminium chloride, or the like.

Particular examples of the benzophenone derivative may include, but are not limited to: 4-phenylbenzophenone, 4-methoxybenzophenone, 4,4'-dimethoxybenzophenone, 4,4'-dimethylbenzophenone, 4,4'-dichlorobenzophenone, 4,4'-dimethylaminobenzophenone, 4,4'-diethylaminobenzophenone, 4-methylbenzophenone, 2,4,6-trimethylbenzophenone, 4-(4-methylthiophenyl)-benzophenone, 3,3'-dimethyl-4-methoxy-benzophenone, methyl-2-benzoyl benzoate, 4-(2-hydroxyethylthio)-benzophenone, 4-(4-tolylthio)benzophenone, 4-benzoyl-N,N,N-trimethylbenzenemethanaminium chloride, 2-hydroxy-3-(4-benzoylphenoxy)-N,N,N-trimethyl-propanaminium chloride monohydrate, 4-hydroxybenzophenone, 4-(13-acryloyl-1,4,7,10,13-pentaoxatridecyl)-benzophenone, 4-benzoyl-N,N-dimethyl-N-[2-(1-oxo-2-propenyl)oxy]ethyl-benzenemethaneminium chloride, or the like.

Particularly, when the photoinitiator includes 2-isopropyl thioxanthone, thioxanthone or a mixture thereof, the polyolefin porous support may be photo-crosslinked even with a lower light dose (e.g. 500 mJ/cm²) as compared to the photo-crosslinking using benzophenone, which is favorable in terms of mass production.

In addition, when the photoinitiator includes 2-isopropyl thioxanthone (ITX), ITX has a low melting point of about 70-80°C, and thus is molten on the surface of the polyolefin porous support at a photo-crosslinking temperature controlled to 80-100°C to generate mobility of ITX into the polyolefin porous support, resulting in an increase in crosslinking efficiency. Further, it is possible to easily prevent a change in physical properties of the finished separator.

The polyolefin porous support may be obtained from the above-described polyolefin materials by forming pores through a conventional process known to those skilled in the art as a process for ensuring high air permeability and porosity, for example, through a wet process using a solvent, a diluent or a pore forming agent, or a dry process using orientation.

According to an embodiment of the present disclosure, the polyolefin porous support may be a porous film.

According to an embodiment of the present disclosure, the polyolefin may include polyethylene; polypropylene; polybutylene; polypentene; polyhexene; polyoctene; a copolymer of at least two of ethylene, propylene, butene, pentene, 4-methylpentene, hexane, heptane and octene; or a mixture thereof.

Non-limiting examples of the polyethylene include low-density polyethylene (LDPE), linear low-density polyethylene (LLDPE), high-density polyethylene (HDPE), or the like. Among those, when the polyethylene is high-density polyethylene having a high crystallization degree and a high resin melting point, it is possible to provide a desired level of heat resistance and an increased modulus.

According to an embodiment of the present disclosure, the polyolefin may have a weight average molecular weight of 200,000-1,500,000, 220,000-100,000, or 250,000-800,000. When the polyolefin has the above-defined range of weight average molecular weight, it is possible to provide excellent strength and heat resistance, while ensuring the uniformity and film-forming processability of the polyolefin porous support.

Herein, the weight average molecular weight may be determined by using gel permeation chromatography (GPC) (PL GPC220, Agilent Technologies) under the following analysis conditions:
- Column: PL Olexis (Polymer Laboratories)
- Solvent: Trichlorobenzene (TCB)
- Flow rate: 1.0 mL/min
- Sample concentration: 1.0 mg/mL
- Injection amount: 200 µL
- Column temperature: 160°C
- Detector: Agilent High Temperature RI detector
- Standard: Polystyrene (corrected with tertiary function)

The photoinitiator allows hydrogen abstraction from a small amount of double bond structures present in the polyolefin chains, and thus radicals are formed in the polymer chains, while hydrogen atoms are removed from the double bond structures of the polyolefin chains through hydrogen abstraction merely by light absorption. Therefore, the inventors of the present disclosure have found that the content of the double bonds present in the polyolefin chains, besides the content of the photoinitiator, affect the crosslinking of the polyolefin chains. The present disclosure is based on this finding.

According to the present disclosure, the polyolefin porous support may have a number of double bonds present in the polyolefin chains of 0.01-0.5 per 1000 carbon atoms, as determined by ¹H-NMR. When the polyolefin porous support has the above-defined number of double bonds, it is possible to control the radicals formed through the hydrogen abstraction from the double bond structures present in the polyolefin chains, caused by the photoinitiator, and thus to perform effective crosslinking of the polyolefin porous support, while minimizing side reactions caused by excessive formation of radicals.

According to the present disclosure, the number of double bonds present in the polyolefin chains is controlled to control the radicals formed therefrom. Therefore, only the polymer chains may be crosslinked with one another, while avoiding the crosslinking of the photoinitiators among themselves or the crosslinking between the photoinitiator and the polymer chains. In this manner, it is possible to prevent side reactions.

It is also possible to prevent the separator from shrinking due to rapid crosslinking caused by excessive formation of radicals. Therefore, it is possible to prevent a decrease in air permeability of the polyolefin porous support after crosslinking.

Further, it is possible to prevent excessive main chain scission of the polyolefin and degradation of the mechanical strength of the polyolefin porous support.

When the number of double bonds present in the polymer chains is less than 0.01 per 1000 carbon atoms, it is difficult to form radicals to such a degree that the polyolefin porous support may be crosslinked sufficiently. Therefore, it is difficult to perform the crosslinking of the polyolefin porous support smoothly.

When the number of double bonds present in the polymer chains is larger than 0.5 per 1000 carbon atoms, the polyolefin porous support may be crosslinked, but radicals are formed excessively to cause side reactions. For example, the photoinitiators may be crosslinked among themselves, or the photoinitiator may be crosslinked with the polyolefin chains. In addition, crosslinking occurs rapidly upon the irradiation of UV rays to cause shrinking of the separator, and main chain scission of the polyolefin occurs to cause degradation of mechanical strength.

According to an embodiment of the present disclosure, the polyolefin porous support may have a number of double bonds present in the polyolefin chains of 0.01-0.3 per 1000 carbon atoms, as determined by ¹H-NMR. When the polyolefin porous support has the above-defined number of double bonds, it is possible to prevent side reactions caused by excessive formation of radicals, while allowing effective crosslinking of the polyolefin porous support. It is also possible to prevent degradation of mechanical strength of a finished crosslinked structure-containing separator for a lithium secondary battery.

The double bond structures present in the polyolefin chains may exist at the ends of the polyolefin chains or may exist in the polyolefin chains, i.e. throughout the polyolefin chains except the ends. Particularly, the number of double bonds present in the polyolefin chains, except the ends, may affect the crosslinking of the polyolefin chains.

According to an embodiment of the present disclosure, the number of double bonds present in the polyolefin chains, except the ends, of the crosslinked structure-containing polyolefin porous support may be 0.005-0.49 per 1000 carbon atoms. Herein, 'double bonds present in the polyolefin chains, except the ends' refers to double bonds present throughout the polyolefin chains, except the ends of the polyolefin chains. In addition, the term 'end' refers to the position of carbon atom linked to each of the both terminals of the polyolefin chains.

According to an embodiment of the present disclosure, the number of double bonds present in the polyolefin chains may be controlled by modifying the type and purity of a catalyst used for synthesizing polyolefin, addition of a linker, or the like.

According to an embodiment of the present disclosure, the polyolefin porous support may have a BET specific surface area of 10-27 m²/g or more, 13-25 m²/g or more, or 15-23 m²/g or more. When the polyolefin porous support satisfies the above range of BET specific surface area, the polyolefin porous support has an increased surface area, and thus shows increased crosslinking efficiency, even when using a small amount of photoinitiator.

The BET specific surface area of the polyolefin porous support may be determined by the BET method. Particularly, the BET specific surface area of the polyolefin porous support may be calculated from the nitrogen gas adsorption at the temperature (77K) of liquid nitrogen by using Belsorp-II mini available from Bell Japan Inc.

According to an embodiment of the present disclosure, the polyolefin porous support may be obtained by the method including the steps of:
supplying polyolefin having a number of double bonds present in the polyolefin chains of 0.01-0.5 per 1000 carbon atoms, as determined by ¹H-NMR, and a diluting agent to an extruder;
extruding a polyolefin composition from the extruder;
passing the extruded polyolefin composition through a die and a cooling roll so that it may be molded and oriented in the form of a sheet;
extracting the diluting agent from the oriented sheet to obtain a preliminary porous support; and
thermally fixing the preliminary porous support to obtain a polyolefin porous support.

According to an embodiment of the present disclosure, the diluting agent may include: paraffin; wax; soybean oil; a phthalic acid ester, such as dibutyl phthalate, dihexyl phthalate, dioctyl phthalate, or the like; aromatic ether, such as diphenyl ether, benzyl ether, or the like; C10-C20 fatty acid, such as palmitic acid, stearic acid, oleic acid, linolic acid, linoleic acid, or the like; C10-C20 fatty acid alcohol, such as palmitic acid alcohol, stearic acid alcohol, oleic acid alcohol, or the like; a fatty acid ester in which one or at least two fatty acids of saturated or unsaturated fatty acids whose fatty acid group has 4-26 carbon atoms, or unsaturated fatty acids whose double bond is substituted with epoxy are ester-bound with a C1-C10 alcohol having 1-8 hydroxyl groups, such as palmitic acid mono-, di- or tri-ester, stearic acid mono-, di- or tri-ester, oleic acid mono-, di- or tri-ester, linoleic acid mono-, di- or tri-ester, or the like; or two or more of them.

The weight ratio of the polyolefin to the diluting agent may be 50:50-20:80 or 40:60-30:70. When the weight ratio of the polyolefin to the diluting agent satisfies the above-defined range, it is possible to ensure an adequate level of porosity and average pore size of the finished polyolefin porous support, to improve the permeability through the interconnection of the pores, to ensure an easily processable level of viscosity by preventing an increase in extrusion load, and to prevent the problems including extrusion of the polyolefin in the form of gel, without thermodynamic kneading with the diluting agent, failure at elongation and non-uniform thickness. In addition, it is possible to prevent degradation of the strength of the finished polyolefin porous support.

In addition to the polyolefin and diluting agent, an antioxidant may be further added to the extruder. The antioxidant may control the radicals formed in the polyolefin chains, thereby controlling the crosslinking between the polymer chains. The antioxidant is oxidized instead of the polymer chains to prevent oxidation of the polymer chains, or absorbs the radicals to control the crosslinking between the polymer chains.

Therefore, when the polyolefin porous support further includes an antioxidant, primarily, it is possible to control the number of double bonds present in the polyolefin chains, except the ends, to prevent excessive formation of radicals, and secondarily, it is possible to control the radicals formed in the polyolefin chains by the antioxidant to complete the reaction, thereby preventing the problem of generation of side reactions.

According to an embodiment of the present disclosure, the content of the antioxidant may be 500-20000 ppm, 1000-15000 ppm, or 2000-13000 ppm, based on the weight of the polyolefin porous support. When the content of the antioxidant satisfies the above-defined range, the antioxidant can sufficiently control excessive formation of radicals, and thus can prevent the problem of side reactions, while preventing the polyolefin porous support from surface roughening.

Such antioxidants may be classified into radical scavengers which react with the radicals formed in polyolefin to stabilize polyolefin, and peroxide decomposers which decompose the peroxide produced by the radicals into a stable form of molecule. The radical scavenger releases hydrogen, stabilizes radicals, and is converted into radicals in itself. However, the radical scavenger may remain in a stable form through the resonance effect or electron rearrangement. The peroxide decomposer may realize an enhanced effect, when being used in combination with the radical scavenger.

According to an embodiment of the present disclosure, the antioxidant may include a first antioxidant as a radical scavenger and a second antioxidant as a peroxide decomposer. The first antioxidant and the second antioxidant have different acting mechanisms. Therefore, when using the first antioxidant as a radical scavenger and the second antioxidant as a peroxide decomposer at the same time, it is possible to easily inhibit undesired radical formation through the synergic effect of the antioxidants.

The content of the first antioxidant may be the same as or different from the content of the second antioxidant.

According to an embodiment of the present disclosure, the first antioxidant may include a phenolic antioxidant, an amine-based antioxidant, or a mixture thereof.

The phenolic antioxidant may include 2,6-di-t-butyl-4-methylphenol, 4,4'-thiobis(2-t-butyl-5-methylphenol), 2,2'-thiodiethylbis-[3-(3,5-di-t-butyl-4-hydroxyphenyl) propionate], pentaerythritol-tetrakis[3-(3,5-di-t-butyl-4-hydroxyphenyl)propionate], 4,4'-thiobis(2-methyl-6-t-butylphenol), 2,2'-thiobis(6-t-butyl-4-methylphenol), octadecyl-[3-(3,5-di-t-butyl-4-hydroxyphenyl)propionate], triethylene glycol-bis-[3-(3-t-butyl-4-hydroxy-5-methylphenol)propionate], thiodiethylene bis[3-(3,5-di-t-butyl-4-hydroxyphenyl)propionate], 6,6'-di-t-butyl-2,2'-thiodi-p-cresol, 1,3,5-tris(4-t-butyl-3-hydroxy-2,6-xylyl)methyl-1,3,5-triazine-2,4,6-(1H,3H,5H)-trione, dioctadecyl 3,3'-thiodipropionate, or two or more of them.

According to an embodiment of the present disclosure, the content of the first antioxidant may be 500~10000 ppm, 1000~12000 ppm, or 1000~10000 ppm, based on the weight of the polyolefin porous support. When the content of the first antioxidant satisfies the above-defined range, it is possible to easily prevent the problem of side reactions caused by excessive formation of radicals.

According to an embodiment of the present disclosure, the second antioxidant may include a phosphorus-based antioxidant, a sulfur-based antioxidant, or a mixture thereof.

The phosphorus-based antioxidant decomposes peroxide to form alcohol and is converted into phosphate. The phosphorus-based antioxidant may include 3,9-bis(2,6-dit-butyl-4-methylphenoxy)-2,4,8,10-tetraoxa-3,9-diphosphaspiro[5,5]undecane, bis(2,6-dicumylphenyl)pentaerythritol diphosphite, 2,2'-methylene bis(4,6-d-t-butylphenyl) 2-ethylhexyl phosphite, bis(2,4-di-t-butyl-6-methylphenyl)-ethyl-phosphite, bis(2,6-di-t-butyl-4-methylphenyl)pentaerythritol diphosphite, bis(2,4-di-t-butylphenyl)pentaerythritol diphosphite, bis(2,4-dicumylphenyl)pentaerythritol diphosphite, distearyl pentaerythritol diphosphite, tris(2,4-di-t-butylphenyl)phosphite, or two or more of them.

The sulfur-based antioxidant may include 3,3'-thiobis-1,1'-didocecyl ester, dimethyl 3,3'-thiodipropionate, dioctadecyl 3,3'-thiodipripionate, 2,2-bis{[3-(dodecylthio)-1-oxopropoxy]methyl}propane-1,3-diyl bis[3-(dodecylthio)propionate], or two or more of them.

According to an embodiment of the present disclosure, the content of the second antioxidant may be 500-10000 ppm, 1000-12000 ppm, or 1000-10000 ppm, based on the weight of the polyolefin porous support. When the content of the second antioxidant satisfies the above-defined range, it is possible to easily prevent the problem of side reactions caused by excessive formation of radicals.

According to an embodiment of the present disclosure, when the antioxidant includes a first antioxidant as a radical scavenger and a second antioxidant as a peroxide decomposer at the same time, the content of the first antioxidant may be 500-10000 ppm or 1000-5000 ppm, based on the weight of the polyolefin porous support, and the content of the second antioxidant may be 500-10000 ppm or 1000-5000 ppm, based on the weight of the polyolefin porous support.

The extrusion may be carried out by using a monoaxial or biaxial extruder at a temperature of 160-240°C for several minutes. To carry out homogeneous reactive extrusion, an extruder using a screw having a ratio of length/diameter (L/D) of 30 or more may be used.

The extruded polyolefin composition is cooled through the die and the cooling roll. Herein, phase separation may occur between the polyolefin and the diluting agent. The phase separation time may affect the BET specific surface area, average pore size, pore shape, etc. of the finished polyolefin porous support.

According to an embodiment of the present disclosure, the orientation may be carried out by sequential or simultaneous orientation using a roll or a tenter. The orientation ratio may be 3 times or more, or 5-10 times, each in the machine direction and the transverse direction, and the total orientation ratio may be 20-80 times. When the orientation ratio satisfies the above-defined ratio, it is possible to prevent the problem of insufficient orientation in one direction, a failure in balance of physical properties between the machine direction and the transverse direction, and degradation of tensile strength and puncture strength. It is also possible to prevent non-orientation and a failure in formation of pores, or to prevent the problem of an increase in shrinkage of the polyolefin porous support caused by breakage during orientation.

As used herein, 'machine direction' refers to the direction of progress during the continuous production of a separator, i.e. the longitudinal direction of the separator, while 'transverse direction' refers to the transverse direction to the machine direction, i.e. the direction perpendicular to the direction of progress during the continuous production of a separator, i.e. the direction perpendicular to the longitudinal direction of the separator.

The orientation temperature may vary with the melting point of the polyolefin used herein and the concentration and type of the diluting agent, and may be selected in such a temperature range that 30-80 wt% of the crystalline segments of the polyolefin in the sheet may be molten. When the orientation temperature satisfies the above-defined range, it is possible to prevent the problem of breakage or non-orientation caused by the lack of softness. In addition, it is possible to prevent a difference in thickness caused by partial over-orientation, or degradation of physical properties caused by a low polyolefin orientation effect. Meanwhile, how much the crystalline segments melt depending on temperature may be obtained through the differential scanning calorimetry (DSC) of the sheet.

The step of extracting the diluting agent from the oriented sheet to obtain a preliminary porous support may be carried out by extracting the diluting agent by using an organic solvent. Particularly, the diluting agent may be extracted from the oriented sheet by using an organic solvent, and then the sheet may be dried. The organic solvent is not particularly limited, as long as it is capable of extraction of the diluting agent. For example, methyl ethyl ketone, methylene chloride, hexane, etc. may be used.

The extraction may be carried out by using any conventional solvent extraction process, such as an immersion process, solvent spray process or ultrasonication process, and such processes may be used alone or in combination. After carrying out extraction, the content of residual diluting agent may be 1 wt% or less based on 100 wt% of the polyolefin porous support. In this case, it is easy to prevent degradation of the physical properties of the polyolefin porous support and a decrease in permeability.

The content of residual diluting agent may be affected by extraction temperature and extraction time. Considering an increase in solubility of the diluting agent and organic solvent and the safety problem caused by boiling of the organic solvent, the extraction temperature is preferably 40°C or lower.

In addition, the extraction time may be varied with the thickness of the polyolefin porous support. In the case of a polyolefin porous support having a thickness of 10-30 µm, the extraction time may be 2-4 minutes.

The thermal fixing is a process of fixing and heating the preliminary porous support so that the finished polyolefin porous support to be shrunk may be fixed forcibly to remove residual stress.

According to an embodiment of the present disclosure, the thermal fixing temperature may be 125-132°C. According to an embodiment of the present disclosure, the thermal fixing time may be 10-120 seconds, 20-90 seconds, or 30-60 seconds. When the thermal fixing time satisfies the above-defined range, polyolefin molecules may be rearranged to remove residual stress of the finished polyolefin porous support, and the problem of pore blocking of the polyolefin porous support caused by partial melting may be reduced.

According to an embodiment of the present disclosure, the step of preparing a polyolefin porous support including a photoinitiator may include adding the photoinitiator to an extruder configured to extrude the polyolefin composition to prepare a polyolefin porous support.

According to another embodiment of the present disclosure, the step of preparing a polyolefin porous support may include coating and drying a photo-crosslinking composition containing a photoinitiator and a solvent on the outer side of the polyolefin porous support.

Herein, the expression 'coating and drying ... on the outer side' refers to not only coating and drying the photo-crosslinking composition directly onto the surface of the polyolefin porous support but also coating and drying the photo-crosslinking composition on the surface of another layer, after forming the layer on the polyolefin porous support.

According to an embodiment of the present disclosure, the polyolefin porous support may be subjected to corona discharge treatment, before coating the photo-crosslinking composition on the polyolefin porous support. The corona discharge treatment may be carried out by applying high-frequency wave and high-voltage output generated by a predetermined driving circuit section between a predetermined discharge electrode and a processing roll provided in a corona discharge treatment machine. The surface of the polyolefin porous support is modified through the corona discharge treatment to improve the wettability of the polyolefin porous support with the photo-crosslinking composition. Therefore, it is possible to carry out crosslinking of the polyolefin porous support more efficiently, even when using the same content of the photoinitiator and/or the same number of double bonds in the polyolefin chains. The corona discharge treatment may be carried out through a room-temperature plasma process.

According to an embodiment of the present disclosure, the solvent may include: cycloaliphatic hydrocarbon, such as cyclopentane and cyclohexane; aromatic hydrocarbon, such as toluene, xylene and ethylbenzene; ketone, such as acetone, ethyl methyl ketone, diisopropyl ketone, cyclohexanone, methylcyclohexane and ethylcyclohexane; chlorinated aliphatic hydrocarbon, such as methylene chloride, chloroform and tetrachlorocarbon; ester, such as ethyl acetate, butyl acetate, γ-butyrolactone and ε-caprolactone; acylonitrile, such as acetonitrile and propionitrile; ether, such as tetrahydrofuran and ethylene glycol diethyl ether; alcohol, such as methanol, ethanol, isopropanol, ethylene glycol and ethylene glycol monomethyl ether; amide, such as N-methyl pyrrolidone and N,N-dimethylformamide; or two or more of them.

According to an embodiment of the present disclosure, the content of the photoinitiator in the photo-crosslinking composition may be 0.015-0.36 parts by weight based on 100 parts by weight of the polyolefin porous support, as well as 0.01-0.5 parts by weight, 0.02-0.45 parts by weight, or 0.25-0.4 parts by weight based on 100 parts by weight of the solvent.

When the content of the photoinitiator satisfies the above-defined range based on the weight of the solvent, it is possible to easily prevent generation of side reactions caused by excessive formation of radicals, while allowing crosslinking of the polyolefin porous support.

**In** addition, according to an embodiment of the present disclosure, the content of the photoinitiator in the photo-crosslinking composition may be 0.015-0.36 parts by weight based on 100 parts by weight of the polyolefin porous support, as well as 0.01-1.0 mg/m², 0.03-0.8 mg/m², or 0.06-0.7 mg/m², based on the specific surface area of the polyolefin porous support. When the content of the photoinitiator satisfies the above-defined range, it is possible to easily prevent generation of side reactions caused by excessive formation of radicals, while allowing crosslinking of the polyolefin porous support.

The content of the photoinitiator based on the specific surface area of the polyolefin porous support may be determined through NMR analysis.

According to an embodiment of the present disclosure, the photo-crosslinking composition may be a photoinitiator solution including a photoinitiator and the solvent.

Non-limiting examples of the method for coating the photoinitiator solution on the polyolefin porous support include dip coating, die coating, roll coating, comma coating, microgravure coating, doctor blade coating, reverse roll coating, Mayer bar coating, direct roll coating, or the like.

After coating the polyolefin porous support with the photoinitiator solution, the drying step may be carried out by using a known process, and may be performed in a batchwise or continuous mode by using an oven or a heating chamber in a temperature range considering the vapor pressure of the solvent used herein. The drying step is for substantially removing the solvent present in the photoinitiator solution, and is preferably carried out as rapidly as possible considering productivity, or the like. For example, the drying step may be carried out for 1 minute or less, or 30 seconds or less.

According to another embodiment of the present disclosure, the photo-crosslinking composition may be a slurry for forming an inorganic composite porous layer, including an inorganic filler, a binder polymer, the photoinitiator and the solvent.

When the photo-crosslinking composition is a slurry for forming an inorganic composite porous layer, the photoinitiator is introduced to the surface of the polyolefin porous support, while the photo-crosslinking composition is coated on the polyolefin porous support, and thus the polyolefin porous support may be crosslinked upon the irradiation with UV rays, and an inorganic composite porous layer may be formed on at least one surface of the polyolefin porous support at the same time.

When the slurry for forming an inorganic composite porous layer is used as a photo-crosslinking composition, the polyolefin porous support may be crosslinked by using a process for forming an inorganic composite porous layer, while avoiding an additional need for a system for applying the photoinitiator directly to the polyolefin porous support, such as a system for coating and drying the solution including the photoinitiator directly on the polyolefin porous support.

In addition, the slurry for forming an inorganic composite porous layer does not require any other monomer than the photoinitiator in order to crosslink the polymer chains in the polyolefin porous support directly. Therefore, even when the photoinitiator is incorporated to the slurry for forming an inorganic composite porous layer together with the inorganic filler and binder polymer, there is no monomer or other ingredients interrupting the photoinitiator from reaching the surface of the polyolefin porous support, and thus the photoinitiator can be introduced sufficiently to the surface of the polyolefin porous support.

In general, the polyolefin porous support itself and the inorganic filler have a high UV-protecting effect. Thus, when UV is irradiated after forming an inorganic composite porous layer containing the inorganic filler, irradiation dose of UV rays arriving at the polyolefin porous support may be reduced. However, according to the present disclosure, the polymer chains in the polyolefin porous support may be crosslinked directly, even when UV rays are irradiated after forming the inorganic composite porous layer.

According to an embodiment of the present disclosure, when the photo-crosslinking composition is a slurry for forming an inorganic composite porous layer, the slurry may include, as a photoinitiator, isopropyl thioxanthone, thioxanthone or a mixture thereof. Particularly, 2-isopropyl thioxanthone or thioxanthone allows photo-crosslinking even under a long wavelength showing a high transmission rate. Therefore, even when the photoinitiator is incorporated to the slurry for forming an inorganic composite porous layer including an inorganic filler and a binder polymer, it is possible to facilitate crosslinking of the polyolefin porous support.

The solvent may function as a solvent capable of dissolving the binder polymer, or as a dispersion medium not capable of dissolving the binder polymer but capable of dispersing the binder polymer, depending on the type of the binder polymer. In addition, the solvent can dissolve the photoinitiator. The solvent may have a solubility parameter similar to the solubility of the binder polymer to be used and a low boiling point. This is because such a solvent allows homogeneous mixing and may be removed with ease subsequently. Non-limiting examples of the solvent are the same as described above.

There is no particular limitation in the inorganic filler, as long as it is electrochemically stable. In other words, there is no particular limitation in the inorganic filler, as long as it causes no oxidation and/or reduction in the range (e.g. 0-5 V based on Li/Li⁺) of operating voltage of an applicable electrochemical device. Particularly, when using an inorganic filler having a high dielectric constant, it is possible to improve the ion conductivity of an electrolyte by increasing the dissociation degree of an electrolyte salt, such as a lithium salt, in a liquid electrolyte.

For the above-mentioned reasons, according to an embodiment of the present disclosure, the inorganic filler may be an inorganic filler having a high dielectric constant of 5 or more, or 10 or more. Non-limiting examples of the inorganic filler having a dielectric constant of 5 or more may include any one selected from the group consisting of BaTiO₃, Pb(Zr,Ti)O₃ (PZT), Pb₁₋ₓLaₓZr_{1-y}Ti_{y}O₃ (PLZT, wherein 0 < x < 1, 0 < y < 1), Pb(Mg_{1/3}Nb_{2/3})O₃-PbTiO₃ (PMN-PT), hafnia (HfO₂), SrTiO₃, SnO₂, CeO₂, MgO, Mg(OH)₂, NiO, CaO, ZnO, ZrO₂, SiO₂, Y₂O₃, Al₂O₃, AlOOH, Al(OH)₃, SiC, TiO₂, or a mixture thereof.

According to another embodiment of the present disclosure, the inorganic filler may be an inorganic filler having lithium-ion transportability, i.e. inorganic filler containing lithium elements and capable of transporting lithium ions, while not storing lithium. Non-limiting examples of the inorganic filler having lithium-ion transportability include lithium phosphate (Li₃PO₄), lithium titanium phosphate (LiₓTi_{y}(PO₄)₃, 0 < x < 2, 0 < y < 3), lithium aluminum titanium phosphate (LiₓAl_{y}Ti_{z}(PO₄)₃, 0 < x < 2, 0 < y < 1, 0 < z < 3), (LiAlTiP)ₓO_{y}-based glass (1 < x < 4, 0 < y < 13), such as 14Li₂O-9Al₂O₃-38TiO₂-39P₂O₅, lithium lanthanum titanate (LiₓLa_{y}TiO₃, 0 < x < 2, 0 < y < 3), lithium germanium thiophosphate (LiₓGe_{y}P_{z}S_{w}, 0 < x < 4, 0 < y < 1, 0 < z < 1, 0 < w < 5), such as Li_{3.25}Ge_{0.25}P_{0.75}S₄, lithium nitride (LiₓN_{y}, 0 < x < 4, 0 < y < 2), such as Li₃N, SiS₂-based glass (LiₓSi_{y}S_{z}, 0 < x < 3, 0 < y < 2, 0 < z < 4), such as Li₃PO₄-Li₂S-SiS₂, and P₂S₅-based glass (LiₓP_{y}S_{z}, 0 < x < 3, 0 < y < 3, 0 < z < 7) , such as LiILi₂S-P₂S₅, or a mixture thereof.

According to an embodiment of the present disclosure, the inorganic filler may have an average particle diameter of 0.01-1.5 µm. When the inorganic filler has the above-defined range of average particle diameter, it is possible to form an inorganic composite porous layer having a uniform thickness and suitable porosity and to provide high dispersibility of inorganic filler and desired energy density.

Herein, the average particle diameter of the inorganic filler means D₅₀ particle diameter, and 'D₅₀' means the particle diameter at the point of 50% in the particle number accumulated distribution as a function of particle diameter. The particle diameter may be determined by using the laser diffraction method. Particularly, a powder to be analyzed is dispersed in a dispersion medium and introduced to a commercially available laser diffraction particle size analyzer (e.g. Microtrac S3500) to measure a difference in diffraction pattern depending on particle size, when the particles pass through laser beams, and then particle size distribution can be calculated. Then, D₅₀ may be determined by calculating the particle diameter at the point of 50% in the particle number accumulated distribution depending on particle diameter in the analyzer system.

The binder polymer may be dissolved in the solvent, or may not be dissolved in the solvent but dispersed in the solvent, depending on the particular type of the binder polymer.

The binder polymer may have a glass transition temperature (T_{g}) of -200 to 200°C. When the binder polymer satisfies the above-defined range of glass transition temperature, it can provide the finished inorganic composite porous layer 20 with improved mechanical properties, such as flexibility and elasticity. The binder polymer may have ion conductivity. When the binder polymer has ion conductivity, it is possible to further improve the performance of a battery. The binder polymer may have a dielectric constant ranging from 1.0 to 100 (measured at a frequency of 1 kHz), or from 10 to 100. When the binder polymer has the above-defined range of dielectric constant, it is possible to improve the salt dissociation degree in an electrolyte.

According to an embodiment of the present disclosure, the binder polymer may include poly(vinylidene fluoride-co-hexafluoropropylene), poly(vinylidene fluoride-co-chlorotrifluoroethylene), poly(vinylidene fluoride-co-tetrafluoroethylene), poly(vinylidene fluoride-co-trichloroethylene), acrylic copolymer, styrene-butadiene copolymer, poly(acrylic acid), poly(methyl methacrylate), poly(butyl acrylate), poly(acrylonitrile), poly(vinyl pyrrolidone), poly(vinyl alcohol), poly(vinyl acetate), poly(ethylene-co-vinyl acetate), poly(ethylene oxide), poly(arylate), cellulose acetate, cellulose acetate butyrate, cellulose acetate propionate, cyanoethylpullulan, cyanoethylpolyvinylalchol, cyanoethyl cellulose, cyanoethyl sucrose, pullulan, carboxymethyl cellulose, or two or more of them.

The acrylic copolymer may include, but is not limited to: ethyl acrylate-acrylic acid-N,N-dimethyl acrylamide copolymer, ethyl acrylate-acrylic acid-2-(dimethylamino)ethyl acrylate copolymer, ethyl acrylate-acrylic acid-N,N-diethylacrylamide copolymer, ethyl acrylate-acrylic acid-2-(diethylamino)ethyl acrylate copolymer, or two or more of them.

According to an embodiment of the present disclosure, the weight ratio of the inorganic filler to the binder polymer is determined considering the thickness, pore size and porosity of the finished inorganic composite porous layer, and may be 50:50-99.9:0.1, or 60:40-99.5:0.5. When the weight ratio of the inorganic filler to the binder polymer satisfies the above-defined range, it is possible to ensure vacant spaces formed among the inorganic filler particles sufficiently, and thus to ensure the pore size and porosity of the inorganic composite porous layer with ease. **In** addition, it is possible to ensure the adhesion among the inorganic filler particles with ease.

The slurry for forming an inorganic composite porous layer may be prepared by dissolving or dispersing the binder polymer in the solvent, adding the inorganic filler thereto and dispersing it therein. The inorganic filler may be added after it is pulverized in advance to a predetermined average particle diameter. Otherwise, the inorganic filler may be added to the slurry containing the binder polymer dissolved or dispersed therein, and then pulverized and dispersed, while controlling it to have a predetermined average particle diameter by using a ball milling process, or the like. Herein, the pulverization may be carried out for 1-20 hours, and the pulverized inorganic filler may have an average particle diameter within the above-defined range. The inorganic filler may be pulverized by using a conventional method, such as ball milling.

According to an embodiment of the present disclosure, the inorganic composite porous layer may further include additives, such as a dispersant and/or a thickener. According to an embodiment of the present disclosure, the additives may include polyvinyl pyrrolidone (PVP), hydroxyethyl cellulose (HEC), hydroxypropyl cellulose (HPC), ethylhydroxyethyl cellulose (EHEC), methyl cellulose (MC), carboxymethyl cellulose (CMC), hydroxyalkylmethyl cellulose, cyanoethylene polyvinyl alcohol, or two or more of them.

According to an embodiment of the present disclosure, the slurry for forming an inorganic composite porous layer may have a solid content of 5-60 wt%, or 30-50 wt%. When the inorganic composite porous layer has the above-defined range of solid content, it is possible to ensure coating uniformity with ease, and to prevent generation of nonuniformity, caused by flowing of the slurry, or to prevent consumption of a lot of energy for drying the slurry.

According to an embodiment of the present disclosure, when the photo-crosslinking composition is the slurry for forming an inorganic composite porous layer, a phase separation process may be carried out after coating the photo-crosslinking composition on the polyolefin porous support. The phase separation may be carried out by humidified phase separation or dipping phase separation.

Hereinafter, humidified phase separation will be explained in more detail.

First, humidified phase separation may be carried out at a temperature of 15-70°C or 20-50°C under a relative humidity of 15-80% or 30-50%. While the slurry for forming an inorganic composite porous layer is dried, it has phase transition properties through a vapor-induced phase separation phenomenon known to those skilled in the art.

To carry out humidified phase separation, a non-solvent for the binder polymer may be introduced in a gaseous state. The non-solvent for the binder polymer is not particularly limited, as long as it cannot dissolve the binder polymer and has partial miscibility with the solvent. For example, a non-solvent providing the binder polymer with a solubility of less than 5 wt% at 25°C may be used. Particular examples of the non-solvent for the binder polymer include water, methanol, ethanol, isopropanol, butanol, ethylene glycol, propylene glycol, tripropylene glycol, or two or more of them.

Hereinafter, dipping phase separation will be explained in more detail.

After coating the slurry for forming an inorganic composite porous layer on the outside of the polyolefin porous support, the coated support is dipped in a solidifying solution containing a non-solvent for the binder polymer for a predetermined time. In this manner, the binder polymer is solidified, while phase separation occurs in the coated slurry for forming an inorganic composite porous layer. In this process, a porous inorganic composite porous layer is formed. Then, the resultant product is washed with water to remove the solidifying solution, followed by drying. The drying step may be carried out by using a known process, and may be performed in a batchwise or continuous mode by using an oven or a heating chamber in a temperature range considering the vapor pressure of the solvent used herein. The drying step is for substantially removing the solvent present in the slurry, and is preferably carried out as rapidly as possible considering productivity, or the like. For example, the drying step may be carried out for 1 minute or less, or 30 seconds or less.

As the solidifying solution, the non-solvent for the binder polymer may be used alone, or a mixed solvent of the non-solvent for the binder polymer with the above-mentioned solvent may be used. When using a mixed solvent of the non-solvent for the binder polymer with the solvent, the content of the non-solvent for the binder polymer may be 50 wt% or more based on 100 wt% of the solidifying solution with a view to formation of a high-quality porous structure and improvement of productivity.

According to another embodiment of the present disclosure, the step of coating and drying a photo-crosslinking composition containing a photoinitiator and a solvent on the outer side of the polyolefin porous support may include:
coating a slurry for forming an inorganic composite porous layer including an inorganic filler, a first binder polymer and a dispersion medium on at least one surface of the polyolefin porous support, followed by drying, to form an inorganic composite porous layer; and
applying a coating solution for forming a porous adhesive layer including a second binder polymer, the photoinitiator and the solvent to the top surface of the inorganic composite porous layer, followed by drying.

Reference will be made to the above description about the inorganic filler.

The dispersion medium may function as a solvent capable of dissolving the first binder polymer, or as a dispersion medium not capable of dissolving the first binder polymer but capable of dispersing the first binder polymer, depending on the type of the first binder polymer. The dispersion medium may have a solubility parameter similar to the solubility of the first binder polymer to be used and a low boiling point. This is because such a dispersion medium allows homogeneous mixing and may be removed with ease subsequently.

According to an embodiment of the present disclosure, the dispersion medium may be an aqueous dispersion medium. When the dispersion medium is an aqueous dispersion medium, it is eco-friendly, does not require an excessive heat quantity for forming and drying an inorganic composite porous layer, and does not need an additional explosion-preventing system, and thus can form an inorganic composite porous layer more easily.

According to an embodiment of the present disclosure, the first binder polymer may not be dissolved in the solvent and the non-solvent for the second binder polymer as described hereinafter. In this case, even when the coating solution as mentioned hereinafter is applied to form a porous adhesive layer after forming the inorganic composite layer, the first binder polymer is not dissolved, and thus it is possible to prevent the first binder polymer dissolved in the solvent and/or the non-solvent for the second binder polymer from blocking the pores with ease.

According to an embodiment of the present disclosure, the first binder polymer may be an aqueous binder polymer. Herein, the first binder polymer may be dissolved in an aqueous solvent or may be dispersed by the aqueous dispersion medium. When the first binder polymer is dispersed by the aqueous dispersion medium, the first binder polymer may be a particle-shaped binder polymer.

According to an embodiment of the present disclosure, the first binder polymer may be a binder polymer having excellent heat resistance. When the first binder polymer has excellent heat resistance, the inorganic composite porous layer may have further improved heat resistance. For example, the separator may show a heat shrinkage of 20% or less, 2-15%, 2-10%, 2-5%, 0-5%, or 0-2% in each of the machine direction and the transverse direction, as determined after allowing the separator to stand at 150°C for 30 minutes.

According to an embodiment of the present disclosure, the first binder polymer may include acrylic polymer, polyacrylic acid, styrene butadiene rubber, polyvinyl alcohol, or two or more of them.

Particularly, the acrylic polymer may include acrylic homopolymer prepared by polymerizing acrylic monomers alone, or copolymers of acrylic monomers with another monomers. For example, the acrylic polymer may include copolymer of ethylhexyl acrylate with methyl methacrylate, polymethyl methacrylate, polyethylhexyl acrylate, polybutyl acrylate, polyacrylonitrile, copolymer of butyl acrylate with methyl methacrylate, or two or more of them.

According to an embodiment of the present disclosure, the weight ratio of the inorganic filler to the first binder polymer may be 95:5-99.9:0.1, 96:4-99.5:0.5, or 97:3-99: 1. When the weight ratio of the inorganic filler to the first binder polymer falls within the above-defined range, a large amount of inorganic filler is distributed per unit area of the separator to provide the separator with improved thermal safety at high temperature. For example, the separator may show a heat shrinkage of 20% or less, 2-15%, 2-10%, 2-5%, 0-5%, or 0-2% in each of the machine direction and the transverse direction, as determined after allowing the separator to stand at 150°C for 30 minutes.

Reference will be made to the above description about the slurry for forming an inorganic composite porous layer.

The slurry for forming an inorganic composite porous layer may be dried by a drying method used conventionally for manufacturing a separator. For example, the coated slurry may be dried by using air for 10 seconds to 30 minutes, 30 seconds to 20 minutes, or 3-10 minutes. When the drying time falls within the above-defined range, it is possible to remove the remaining solvent, while not adversely affecting the productivity.

The second binder polymer may be a binder polymer used conventionally for forming an adhesive layer. The second binder polymer may have a glass transition temperature (T_{g}) of -200 to 200°C. When the second binder polymer satisfies the above-defined range of glass transition temperature, it can provide the finished adhesive layer with improved mechanical properties, such as flexibility and elasticity. The second binder polymer may have ion conductivity. When the second binder polymer has ion conductivity, it is possible to further improve the performance of a battery. The second binder polymer may have a dielectric constant ranging from 1.0 to 100 (measured at a frequency of 1 kHz), or from 10 to 100. When the second binder polymer has the above-defined range of dielectric constant, it is possible to improve the salt dissociation degree in an electrolyte.

According to an embodiment of the present disclosure, the second binder polymer may include poly(vinylidene fluoride), poly(vinylidene fluoride-co-hexafluoropropylene), poly(vinylidene fluoride-co-trichloroethylene), poly(vinylidene fluoride-co-tetrafluoroethylene), poly(vinylidene fluoride-co-trifluoroethylene), poly(methyl methacrylate), poly(ethylhexyl acrylate), poly(butyl acrylate), poly(acrylonitrile), poly(vinyl pyrrolidone), poly(vinyl acetate), poly(ethylhexyl acrylate-co-methyl methacrylate), poly(ethylene-co-vinyl acetate), polyethylene oxide, poly(arylate), or two or more of them.

The solvent may be one capable of dissolving the second binder polymer at 5 wt% or more, 15 wt% or more, or 25 wt% or more, at 25°C.

The solvent may be a non-solvent for the first binder polymer. For example, the solvent may dissolve the first binder polymer at a concentration of less than 5 wt% at 25°C.

Reference will be made to the above description about the particular types of the solvent.

According to an embodiment of the present disclosure, the second binder polymer may be used in an amount of 3-30 wt%, or 5-25 wt%, based on 100 wt% of the coating solution for forming a porous adhesive layer.

Since the photoinitiator is contained in the coating solution for forming a porous adhesive layer, the photoinitiator can be introduced to the surface of the polyolefin porous support, while forming a porous adhesive layer at the same time, when coating the coating solution for forming a porous adhesive layer on the top surface of the inorganic composite porous layer.

While applying the coating solution for forming a porous adhesive layer, the polyolefin porous support is wetted with the solvent. Herein, the photoinitiator contained in the coating solution for forming a porous adhesive layer is introduced to the polyolefin porous support, and the polyolefin porous support may be photo-crosslinked by the photoinitiator present on the surface of the polyolefin porous support, upon the UV irradiation.

In this manner, the method for manufacturing a crosslinked structure-containing separator for a lithium secondary battery according to an embodiment of the present disclosure can simplify the process in that the polyolefin porous support can be photo-crosslinked by using a step of forming a porous adhesive layer, while avoiding a need for a system for directly applying the photoinitiator to the polyolefin porous support in order to photo-crosslink the polyolefin porous support, for example, a system for directly coating and drying a solution containing the photoinitiator on the polyolefin porous support.

The method for manufacturing a crosslinked structure-containing separator for a lithium secondary battery according to an embodiment of the present disclosure does not require any other ingredient, such as a monomer for forming radicals, than the photoinitiator to perform direct crosslinking of the polymer chains in the polyolefin porous support. Thus, even though the photoinitiator is added to the coating solution for forming a porous adhesive layer, there is no ingredient interrupting the photoinitiator from reaching the surface of the polyolefin porous polymer support. As a result, the photoinitiator can be introduced sufficiently to the surface of the polyolefin porous support.

Additionally, in general, the polyolefin porous polymer support itself and the inorganic filler have a high UV-protecting effect. Thus, when UV is irradiated after forming an inorganic composite porous layer and porous adhesive layer, irradiation dose of UV rays arriving at the polyolefin porous support may be reduced. However, according to the present disclosure, crosslinking may be accomplished even with a low UV irradiation dose, and the polymer chains in the polyolefin porous support may be crosslinked directly, even when the UV is irradiated after forming the inorganic composite porous layer and porous adhesive layer.

According to an embodiment of the present disclosure, the coating solution for forming a porous coating layer may include, as a photoinitiator, 2-isopropyl thioxanthone, thioxanthone or a mixture thereof. Particularly, 2-isopropyl thioxanthone or thioxanthone allows photo-crosslinking even under a long wavelength showing a high transmission rate. Therefore, even when UV rays are irradiated after forming the inorganic composite porous layer and porous adhesive layer, the polyolefin porous support may be crosslinked with ease.

According to an embodiment of the present disclosure, it is possible to form a pattern on the finished porous adhesive layer through the pattern coating of the coating solution for forming a porous adhesive layer on the top surface of the inorganic composite porous layer.

According to an embodiment of the present disclosure, after applying the coating solution for forming a porous adhesive layer on the top surface of the inorganic composite porous layer, phase separation may be carried out. Herein, the phase separation may be carried out by dipping phase separation.

After applying the coating solution for forming a porous adhesive layer on the top surface of the inorganic composite porous layer, the resultant product is dipped in a solidifying solution containing a non-solvent for the second binder polymer for a predetermined time to perform dipping phase separation. In this manner, the second binder polymer is solidified, while phase separation occurs in the coated solution for forming a porous adhesive layer. In this process, a porous adhesive layer is formed. Then, the resultant product is washed with water to remove the solidifying solution, followed by drying. The drying step may be carried out by using a known process, and may be performed in a batchwise or continuous mode by using an oven or a heating chamber in a temperature range considering the vapor pressure of the solvent used herein. The drying step is for substantially removing the solvent present in the coating solution for forming a porous adhesive layer, and is preferably carried out as rapidly as possible considering productivity, or the like. For example, the drying step may be carried out for 1 minute or less, or 30 seconds or less.

As the solidifying solution, the non-solvent for the second binder polymer may be used alone, or a mixed solvent of the non-solvent for the second binder polymer with the above-mentioned solvent may be used. When using a mixed solvent of the non-solvent for the second binder polymer with the solvent, the content of the non-solvent for the second binder polymer may be 50 wt% or more based on 100 wt% of the solidifying solution with a view to formation of a high-quality porous structure and improvement of productivity.

The second binder polymer is condensed, while the second binder polymer is solidified. Thus, it is possible to prevent the second binder polymer from infiltrating to the surface and/or inner part of the polyolefin porous support, and to prevent an increase in resistance of the separator. In addition, the adhesive layer including the second binder polymer becomes a porous layer to improve the resistance of the separator.

The non-solvent for the second binder polymer may dissolve the second binder polymer at a concentration of less than 5 wt% at 25°C.

The non-solvent for the second binder polymer may also be a non-solvent for the first binder polymer. For example, the non-solvent for the second binder polymer may dissolve the first binder polymer at a concentration of less than 5 wt% at 25°C.

According to an embodiment of the present disclosure, particular examples of the non-solvent for the second binder polymer include water, methanol, ethanol, propyl alcohol, butyl alcohol, butanediol, ethylene glycol, propylene glycol, tripropylene glycol, or two or more of them.

According to an embodiment of the present disclosure, the dipping time may be 3 seconds to 1 minute. When the dipping time satisfies the above-defined range, phase separation occurs suitably to ensure the adhesion between the inorganic composite porous layer and the porous adhesive layer and to prevent interlayer separation of the adhesive layer with ease.

According to an embodiment of the present disclosure, the coating solution for forming a porous adhesive layer may be dried by a drying method used conventionally for manufacturing a separator. For example, the coated slurry may be dried by using air for 10 seconds to 30 minutes, 30 seconds to 20 minutes, or 3-10 minutes. When the drying time falls within the above-defined range, it is possible to remove the remaining solvent, while not adversely affecting the productivity.

As a result, the inorganic composite porous layer and the porous adhesive layer are formed individually through a separate step in the method for manufacturing a crosslinked structure-containing separator for a lithium secondary battery according to an embodiment of the present disclosure, and thus the porous adhesive layer may be formed with various forms. For example, the porous adhesive layer may be formed as a patterned layer with ease.

After that, UV rays are irradiated to the polyolefin porous support. As UV rays are irradiated, the polymer chains in the polyolefin porous support are crosslinked to provide a crosslinked structure-containing polyolefin porous support having a structure including polymer chains interconnected directly with one another.

UV irradiation is carried out by using a UV crosslinking system, while controlling UV irradiation time and irradiation dose adequately considering the content of the photoinitiator, or the like. For example, the UV irradiation time and irradiation dose may be set under such a condition that the polyolefin chains in the polyolefin porous support may be crosslinked sufficiently to ensure a desired level of heat resistance, while preventing the polyolefin porous support from being damaged by the heat generated by the UV lamp. In addition, the UV lamp used for the UV crosslinking system may be selected suitably from a high-temperature mercury lamp, a metal lamp, a gallium lamp, or the like, depending on the photoinitiator, and the light emission wavelength and dose of the UV lamp may be selected suitably depending on the process.

The method for manufacturing a crosslinked structure-containing separator for a lithium secondary battery according to an embodiment of the present disclosure can perform photo-crosslinking of the polymer chains in the polyolefin porous support even with a significantly smaller UV irradiation light dose as compared to the light dose used for general photo-crosslinking. Therefore, it is possible to increase the applicability to a mass production process. For example, the UV light dose may be 10-2000 mJ/cm², 50-1000 mJ/cm², or 150-500 mJ/cm².

According to an embodiment of the present disclosure, 'UV light dose' may be determined by using a portable light dose measuring instrument called H type UV bulb and UV power puck available from Miltec. When determining light dose by using H type UV bulb available from Miltec, three types of wavelength values of UVA, UVB and UVC are derived depending on wavelength, and UV rays used herein corresponds to UVA.

According to the present disclosure, the method for determining 'UV light dose' includes passing UV power puck through a conveyer in the presence of a light source under the same condition as a sample, and the UV light dose value displayed in UV power puck is defined as 'UV light dose'.

The method for manufacturing a crosslinked structure-containing separator for a lithium secondary battery according to an embodiment of the present disclosure uses a photoinitiator in an amount of 0.015-0.36 parts by weight based on 100 parts by weight of the polyolefin porous support to perform crosslinking of the polyolefin porous support having a number of double bonds present in the polyolefin chains of 0.01-0.5 per 1000 carbon atoms, as determined by ¹H-NMR. In this manner, it is possible to minimize side reactions, while the polyolefin porous support is crosslinked effectively.

In addition, when an antioxidant is further used in the method for manufacturing a crosslinked structure-containing separator for a lithium secondary battery according to an embodiment of the present disclosure, it is possible to prevent generation of side reactions with ease, in addition to the effect of the number of double bonds present in the polyolefin chains.

The crosslinked structure-containing separator for a lithium secondary battery as described above may be interposed between a positive electrode and a negative electrode to obtain a lithium secondary battery.

The lithium secondary battery may have various shapes, such as a cylindrical shape, a prismatic shape, a pouch-like shape, or the like.

The lithium secondary battery may include a lithium metal secondary battery, a lithium-ion secondary battery, a lithium polymer secondary battery, a lithium-ion polymer secondary battery, or the like.

The electrodes used in combination with the crosslinked structure-containing separator for a lithium secondary battery according to the present disclosure are not particularly limited, and may be obtained by allowing electrode active materials to be bound to an electrode current collector through a method generally known in the art.

Among the electrode active materials, non-limiting examples of a positive electrode active material include, but are not limited to: layered compounds, such as lithium cobalt oxide (LiCoO₂) and lithium nickel oxide (LiNiO₂), or those compounds substituted with one or more transition metals; lithium manganese oxides such as those represented by the chemical formula of Li₁₊ₓMn₂₋ₓO₄ (wherein x is 0-0.33), LiMnO₃, LiMn₂O₃ and LiMnO₂; lithium copper oxide (Li₂CuO₂); vanadium oxides such as LiV₃O₈, LiV₃O₄, V₂O₅ or Cu₂V₂O₇; Ni-site type lithium nickel oxides represented by the chemical formula of LiNi₁₋ₓMₓO₂ (wherein M is Co, Mn, Al, Cu, Fe, Mg, B or Ga, and x is 0.01-0.3); lithium manganese composite oxides represented by the chemical formula of LiMn₂₋ₓMₓO₂ (wherein M is Co, Ni, Fe, Cr, Zn or Ta, and x is 0.01-0.1) or Li₂Mn₃MO₈ (wherein M is Fe, Co, Ni, Cu or Zn); LiMn₂O₄ in which Li is partially substituted with an alkaline earth metal ion; disulfide compounds; Fe₂(MoO₄)₃; or the like.

Non-limiting examples of a negative electrode active material include conventional negative electrode active materials that may be used for the negative electrodes for conventional electrochemical devices. Particularly, lithium-intercalating materials, such as lithium metal or lithium alloys, carbon, petroleum coke, activated carbon, graphite or other carbonaceous materials, are used preferably.

Non-limiting examples of a positive electrode current collector include foil made of aluminum, nickel or a combination thereof. Non-limiting examples of a negative electrode current collector include foil made of copper, gold, nickel, copper alloys or a combination thereof.

According to an embodiment of the present disclosure, the conductive material used in each of the negative electrode and the positive electrode may be added in an amount of 1-30 wt% based on the total weight of the active material layer. The conductive material is not particularly limited, as long as it causes no chemical change in the corresponding battery and has conductivity. Particular examples of the conductive material include: graphite, such as natural graphite or artificial graphite; carbon black, such as acetylene black, Ketjen black, channel black, furnace black, lamp black or thermal black; conductive fibers, such as carbon fibers or metallic fibers; fluorocarbon; metal powder, such as aluminum or nickel powder; conductive whisker, such as zinc oxide or potassium titanate; conductive metal oxide, such as titanium oxide; conductive materials, such as polyphenylene derivatives, or the like.

According to an embodiment of the present disclosure, the binder used in each of the negative electrode and the positive electrode independently is an ingredient which assists binding between an active material and a conductive material and binding to a current collector. In general, the binder may be added in an amount of 1-30 wt% based on the total weight of the active material layer. Particular examples of the binder include polyvinylidene fluoride (PVDF), polyacrylic acid (PAA), polyvinyl alcohol, carboxymethyl cellulose (CMC), starch, hydroxypropyl cellulose, regenerated cellulose, polyvinyl pyrrolidone, tetrafluoroethylene, polyethylene, polypropylene, ethylenepropylene-diene terpolymer (EPDM), sulfonated EPDM, styrene-butadiene rubber, fluoro-rubber, various copolymers, or the like.

According to an embodiment of the present disclosure, the lithium secondary battery includes an electrolyte, which may include an organic solvent and a lithium salt. In addition, the electrolyte may include an organic solid electrolyte or an inorganic solid electrolyte.

Particular examples of the organic solvent include aprotic organic solvents, such as N-methyl-2-pyrrolidone, ethylene carbonate, propylene carbonate, butylene carbonate, dimethyl carbonate, diethyl carbonate, γ-butyrolactone, 1,2-dimethoxyethane, tetrahydroxy franc, 2-methyl tetrahydrofuran, dimethyl sulfoxide, 1,3-dioxolan, formamide, dimethyl formamide, dioxolan, acetonitrile, nitromethane, methyl formate, methyl acetate, triphosphate, trimethoxymethane, dioxolan derivatives, sulforane, methyl sulforane, 1,3-dimethyl-2-imidazolidione, propylene carbonate derivatives, tetrahydrofuran derivatives, ethers, methyl propionate, ethyl propionate, or the like.

The lithium salt is a material which can be dissolved in the non-aqueous electrolyte with ease, and particular examples thereof include LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, (CF₃SO₂)₂NLi, lithium chloroborate, lithium lower aliphatic carboxylate, lithium tetraphenyl borate, imide, or the like.

In addition, the electrolyte may further include pyridine, triethyl phosphite, triethanolamine, cyclic ethers, ethylene diamine, n-glyme, triamide hexaphosphate, nitrobenzene derivatives, sulfur, quinone imine dyes, N-substituted oxazolidinone, N,N-substituted imidazolidine, ethylene glycol dialkyl ether, ammonium salt, pyrrole, 2-methoxyethaol and aluminum trichloride in order to improve the charge/discharge characteristics, flame resistance, or the like. Optionally, the electrolyte may further include a halogen-containing solvent, such as carbon tetrachloride or trifluoroethylene, in order to impart non-combustibility. The electrolyte may further include carbon dioxide gas in order to improve the high-temperature storage characteristics.

Particular examples of the organic solid electrolyte may include polyethylene derivatives, polyethylene oxide derivatives, polypropylene oxide derivatives, phosphate polymer, polyagitation lysine, polyester sulfide, polyvinyl alcohol, polyvinylidene fluoride, polymers containing an ionically dissociable group, or the like.

Particular examples of the inorganic solid electrolyte may include nitrides, halides and sulfates of Li, such as Li₃N, LiI, Li₅NI₂, Li₃N-LiI-LiOH, LiSiO₄, LiSiO₄-LiI-LiOH, Li₂SiS₃, Li₄SiO₄, Li₄SiO₄-LiI-LiOH and Li₃PO₄-Li₂S-SiS₂.

Injection of the electrolyte may be carried out in an adequate step during the process for manufacturing a battery depending on the manufacturing process of a final product and properties required for a final product. In other words, injection of the electrolyte may be carried out before the assemblage of a battery or in the final step of the assemblage of a battery.

According to an embodiment of the present disclosure, the crosslinked structure-containing separator for a secondary battery may be applied to a battery through lamination, stacking and folding of the separator with electrodes, besides a conventional process, winding.

According to an embodiment of the present disclosure, the crosslinked structure-containing separator for a secondary battery may be interposed between the positive electrode and the negative electrode. When an electrode assembly is formed by assembling a plurality of cells or electrodes, the separator may be interposed between the adjacent cells or electrodes. The electrode assembly may have various structures, such as a simple stack type, a jelly-roll type, a stacked-folded type, a laminated-stacked type, or the like.

### MODE FOR DISCLOSURE

Examples will be described more fully hereinafter so that the present disclosure can be understood with ease. The following examples may, however, be embodied in many different forms and should not be construed as limited to the exemplary embodiments set forth therein. Rather, these exemplary embodiments are provided so that the present disclosure will be thorough and complete, and will fully convey the scope of the present disclosure to those skilled in the art.

### Example 1

A polyolefin composition was prepared by mixing 30 parts by weight of polyolefin (Korea Petrochemical Ind. Co. Ltd.) having a number of double bonds present in the polymer chains of 0.07 per 1000 carbon atoms, as determined by ¹H-NMR, 70 parts by weight of liquid paraffin oil (LP350 available from Kukdong Oil & Chem.), 4000 ppm of pentaerythritol tetrakis[3-(3,5-di-tert-butyl-4-hydroxyphenyl)propionate] (Irganox 1010 available from BASF) as a first antioxidant, and 4000 ppm of tris(2,4-di-t-butylphenyl)phosphite (Irgafos 168 available from BASF) as a second antioxidant.

The resultant polyolefin composition was introduced to and kneaded in a biaxial extruder to carry out extrusion.

The resultant product was passed through a die and a cooling roll to perform molding into a sheet-like shape, and then biaxial orientation was carried out in the machine direction (MD) and the transverse direction (TD) by using a tenter type differential orientation machine.

Then, the liquid paraffin oil was extracted from the oriented sheet by using methylene chloride, and thermal fixing was carried out at 128°C to obtain a polyolefin porous support.

### Manufacture of Crosslinked Structure-Containing Separator for Lithium Secondary Battery

As a photoinitiator, 2-isopropyl thioxanthone (Sigma Aldrich Co.) was prepared.

As a UV light source, a high-pressure mercury lamp (high-pressure mercury lamp available from Lichtzen, LH-250/800-A) was prepared.

The photoinitiator was added to acetone in an amount of 0.075 parts by weight of the photoinitiator based on 100 parts by weight of acetone to prepare a photo-crosslinking composition.

The prepared polyolefin porous support was dipped in the photo-crosslinking composition for 30 seconds and taken out therefrom, and then while cutting the coating solution by using a bar so that the photo-crosslinking composition might not remain on the surface of the porous support and the content of the photoinitiator might be 0.054 parts by weight based on 100 parts by weight of the polyolefin porous support, dried at room temperature (25°C) for 1 minute.

After that, UV rays were irradiated to the polyolefin porous support coated with the photo-crosslinking composition to an accumulated light dose, i.e. UV irradiation dose of 500 mJ/cm². Herein, the UV irradiation intensity was set to 80% of the UV light source.

In this manner, a crosslinked structure-containing separator for a lithium secondary battery, including a crosslinked structure-containing polyolefin porous support having a crosslinked structure including polymer chains interconnected directly with one another, was obtained.

### Example 2

A polyolefin porous support and a crosslinked structure-containing separator for a lithium secondary battery were obtained in the same manner as Example 1, except that 2000 ppm of the first antioxidant and 2000 ppm of the second antioxidant were used.

### Example 3

A crosslinked structure-containing separator for a lithium secondary battery were obtained in the same manner as Example 1, except that the polyolefin porous support was subjected to corona discharge treatment in the air at a voltage of 3 kV, while the polyolefin porous support was allowed to run at 40 m/min, before dipping the polyolefin porous support in the photo-crosslinking composition.

### Example 4

A polyolefin porous support and a crosslinked structure-containing separator for a lithium secondary battery were obtained in the same manner as Example 2, except that polyolefin having a number of double bonds present in the polymer chains of 0.42 per 1000 carbon atoms, as determined by ¹H-NMR, was used.

### Comparative Example 1

A polyethylene porous film (Senior Co., SW7091) was used as a separator for a lithium secondary battery without any further treatment.

### Comparative Example 2

A crosslinked structure-containing separator for a lithium secondary battery were obtained in the same manner as Example 1, except that 200 kGy of E-beam was irradiated in E-beam (EB tech). Herein, 200 kGy of E-beam corresponds to a dose causing crosslinking.

### Test Example 1: Determination of Number of Double Bonds Present in Polyolefin Chains in Crosslinked Structure-Containing Polyolefin Porous Support through ¹H-NMR

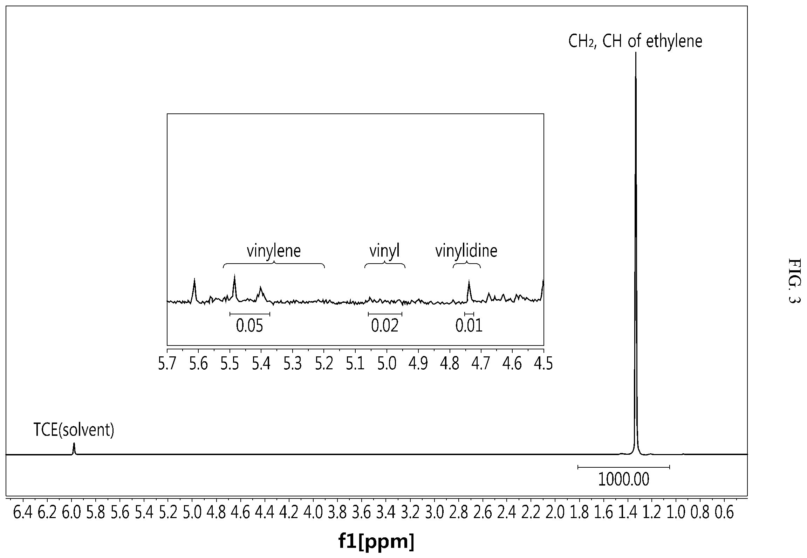

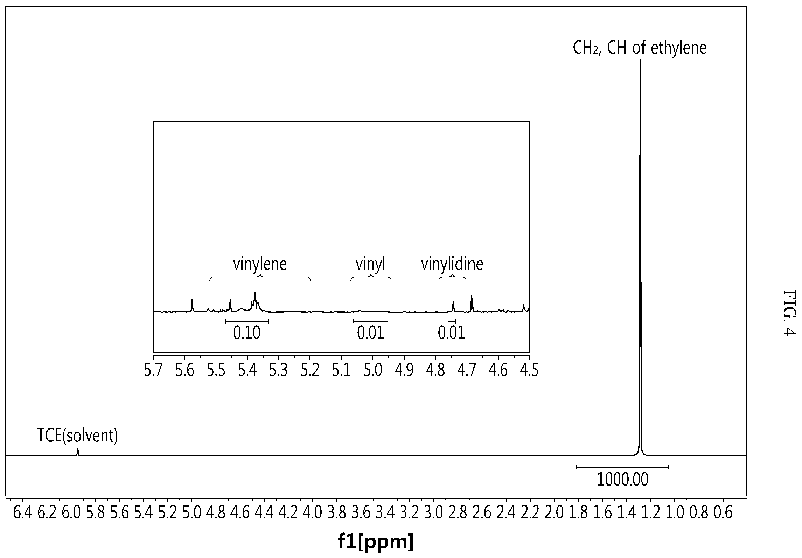

In the crosslinked structure-containing separator for a lithium secondary battery according to each of Examples 1 and 2, the number of double bonds present in the polyolefin chains in the crosslinked structure-containing polyolefin porous support was determined through NMR. The results are shown in FIG. 3 and FIG. 4.

FIG. 3 shows data illustrating the number of double bonds of the polyolefin porous support according to Example 1, as analyzed by NMR.

FIG. 4 shows data illustrating the number of double bonds of the polyolefin porous support according to Example 2, as analyzed by NMR.

### Test Example 2: Determination of Physical Properties of Separators

The crosslinked structure-containing separator for a lithium secondary battery according to each of Examples 1-4 and Comparative Examples 1 and 2 was determined in terms of the number of double bonds present in the polyolefin chains in the crosslinked structure-containing polyolefin porous support, crosslinking degree, meltdown temperature and shutdown temperature. The results are shown in the following Table 1.

In addition, a battery including the crosslinked structure-containing separator for a lithium secondary battery according to each of Examples 1-4 and Comparative Examples 1 and 2 was determined in terms of a change in open circuit voltage (OCV) after being stored at high temperature. The results are also shown in Table 1.

### (1) Determination of Number of Double Bonds Present in Polyolefin Chains in Crosslinked Structure-Containing Polyolefin Porous Support through ¹H-NMR

The number of double bonds present in the polyolefin chains in the crosslinked structure-containing polyolefin porous support was determined through NMR.

### (2) Evaluation of Crosslinking Degree

The crosslinking degree was evaluated by dipping the crosslinked structure-containing polyolefin porous support according to each of Examples 1-4 and Comparative Examples 1 and 2 in xylene solution at 135°C, boiling it therein for 12 hours, measuring the residual weight, according to ASTM D2765, and calculating a percentage of the residual weight based on the initial weight.

### (3) Evaluation of Meltdown Temperature

The meltdown temperature was determined by taking a sample from each separator in each of the machine direction (MD) and the transverse direction (TD) and analyzing each sample through thermomechanical analysis (TMA). Particularly, a sample having a size of width x length of 4.8 mm x 8 mm was introduced to a TMA instrument (TA Instrument, Q400) and warmed from a temperature of 30°C to 220°C at a heating rate of 5°C/min, while applying a tension of 0.01 N thereto. As the temperature was increased, the sample showed a change in length. Then, the temperature at which point the sample was broken after a rapid increase in length was measured.

### (4) Evaluation of Shutdown Temperature

After fixing the separator to an air permeability tester, the shutdown temperature was determined by measuring air permeability under heating at a rate for 5°C per minute. Herein, the air permeability was determined by measuring a time (sec) required for 100 mL of air to pass through the separator under a constant pressure of 0.05 MPa by using an air permeability tester (Model Name: EG01-55-1MR, available from Asahi Seiko Co.). Herein, the temperature where the separator shows a rapid increase in air permeability was taken as the shutdown temperature.

### (5) Evaluation of Change in Open Circuit Voltage (OCV) after High-Temperature Storage

The separator according to each of Examples 1-4 and Comparative Examples 1 and 2 was used to obtain a mono-cell, and the mono-cell was charged to a state of SOC 100 under the conditions of 0.3 C and 4.2 V (1/20 C cut-off) in a constant current (CC)/constant voltage (CV) mode, stored at 60°C for 3 days, and then the battery was observed in terms of a change in open circuit voltage (OCV).

### Manufacture of Negative Electrode

Artificial graphite as a negative electrode material, denka black as a conductive material and polyvinylidene fluoride (PVDF) as a binder were mixed at a weight ratio of 75:5:20, and N-methyl pyrrolidone (NMP) as a solvent was added thereto to prepare a negative electrode slurry.

The negative electrode slurry was coated on a copper current collector at a loading amount of 3.8 mAh/cm², followed by drying, to obtain a negative electrode.

### Manufacture of Positive Electrode

LiCoO₂ as a positive electrode active material, denka black as a conductive material and polyvinylidene fluoride (PVDF) as a binder were added N-methyl pyrrolidone (NMP) as a solvent at a weight ratio of 85:5:10 to prepare a positive electrode active material slurry. The positive electrode active material slurry was coated on a sheet-like aluminum current collector, followed by drying, to form a positive electrode active material layer with a final positive electrode loading amount of 3.3 mAh/cm².

### Manufacture of Mono-Cell

The polyolefin porous support according to each of Examples and Comparative Examples was interposed between the negative electrode and the positive electrode obtained as described above, and a non-aqueous electrolyte (1 M LiPF₆, ethylene carbonate (EC)/propylene carbonate (PC)/diethyl carbonate (DEC), volume ratio 3:3:4) was injected thereto to obtain a mono-cell.

**[Table 1]**

| | | Ex. 1 | Ex. 2 | Ex. 3 | Ex. 4 | Comp. Ex. 1 | Comp. Ex. 2 |
|---|---|---|---|---|---|---|---|
| Number (No.) of double bonds present in polyolefin chains in crosslinked structure-containing polyolefin porous support | | 0.07 | 0.09 | 0.08 | 0.48 | 0.23 | 0.66 |
| Crosslinking degree (%) | | 32 | 37 | 40 | 42 | 0 | 0 |
| Meltdown temperature (°C) | MD | 199 | 203 | 205 | 206 | 151 | 150 |
| | TD | 194 | 198 | 200 | 202 | 149 | 148 |
| Shutdown temperature (°C) | | 140 | 140 | 139 | 138 | 139 | 130 |
| ΔOCV (V) | | 0.036 | 0.044 | 0.051 | 0.066 | 0.048 | 0.332 |

As can be seen from Table 1, the separator according to each of Examples 1-4 has a crosslinked structure including polymer chains interconnected directly with one another, and thus show a significantly increased meltdown temperature to 160°C or higher, while showing an insignificant increase in shutdown temperature, as compared to Comparative Example 1 having no crosslinked structure.

In addition, it can be seen that the separator according to each of Examples 1-4 has a number of double bonds present in the polyolefin chains in the crosslinked structure-containing polyolefin porous support of 0.01-0.6, and thus causes no significant change in OCV, as compared to the separator according to Comparative Example 2, even after high-temperature storage.

## Claims

1. A crosslinked structure-containing polyolefin porous support which has a number of double bonds present in the polyolefin chains of 0.01-0.6 per 1000 carbon atoms, as determined by ¹H-NMR, and comprises polymer chains interconnected directly with one another.

2. A crosslinked structure-containing separator for a lithium secondary battery comprising the crosslinked structure-containing polyolefin support as defined in claim 1.

3. The crosslinked structure-containing separator for a lithium secondary battery according to claim 2, which further comprises an inorganic composite porous layer disposed on at least one surface of the crosslinked structure-containing polyolefin porous support and comprising an inorganic filler and a binder polymer.

4. The crosslinked structure-containing separator for a lithium secondary battery according to claim 2, which further comprises:
an inorganic composite porous layer disposed on at least one surface of the crosslinked structure-containing polyolefin porous support and comprising an inorganic filler and a first binder polymer; and
a porous adhesive layer disposed on the inorganic composite porous layer and including a second binder polymer.

5. The crosslinked structure-containing separator for a lithium secondary battery according to claim 4,
wherein the first binder polymer comprises acrylic polymer, polyacrylic acid, styrene butadiene rubber, polyvinyl alcohol, or two or more of them; and/or
wherein the second binder polymer comprises poly(vinylidene fluoride), poly(vinylidene fluoride-co-hexafluoropropylene), poly(vinylidene fluoride-co-trichloroethylene), poly(vinylidene fluoride-co-tetrafluoroethylene), poly(vinylidene fluoride-co-trifluoroethylene), poly(methyl methacrylate), poly(ethylhexyl acrylate), poly(butyl acrylate), poly(acrylonitrile), poly(vinyl pyrrolidone), poly(vinyl acetate), poly(ethylhexyl acrylate-co-methyl methacrylate), poly(ethylene-co-vinyl acetate), polyethylene oxide, poly(arylate), or two or more of them.

6. The crosslinked structure-containing separator for a lithium secondary battery according to claim 2, which has a meltdown temperature of 160°C or higher and/or has a shutdown temperature of 145°C or less.

7. A method for manufacturing a crosslinked structure-containing separator for a lithium secondary battery, comprising the steps of:
preparing a polyolefin porous support comprising a photoinitiator and having a number of double bonds present in the polyolefin chains of 0.01-0.5 per 1000 carbon atoms, as determined by ¹H-NMR; and
irradiating ultraviolet rays to the polyolefin porous support including a photoinitiator,
wherein the content of the photoinitiator is 0.015-0.36 parts by weight based on 100 parts by weight of the polyolefin porous support.

8. The method for manufacturing a crosslinked structure-containing separator for a lithium secondary battery according to claim 7, wherein an antioxidant is further added in the step of preparing a polyolefin porous support, and the content of the antioxidant is 500-20000 ppm based on the weight of the polyolefin porous support.

9. The method for manufacturing a crosslinked structure-containing separator for a lithium secondary battery according to claim 8, wherein the antioxidant comprises a first antioxidant which is a radical scavenger and a second antioxidant which is a peroxide decomposer.

10. The method for manufacturing a crosslinked structure-containing separator for a lithium secondary battery according to claim 9,
wherein the first antioxidant comprises a phenolic antioxidant, an amine-based antioxidant, or a mixture thereof; and/or
wherein the second antioxidant comprises a phosphorus-based antioxidant, a sulfur-based antioxidant, or a mixture thereof.

11. The method for manufacturing a crosslinked structure-containing separator for a lithium secondary battery according to claim 9, wherein the content of the first antioxidant is 500-10000 ppm based on the weight of the polyolefin porous support, and the content of the second antioxidant is 500-10000 ppm based on the weight of the polyolefin porous support.

12. The method for manufacturing a crosslinked structure-containing separator for a lithium secondary battery according to claim 7, wherein the photoinitiator comprises a Type 2 photoinitiator.

13. The method for manufacturing a crosslinked structure-containing separator for a lithium secondary battery according to claim 7, wherein the step of preparing a polyolefin porous support comprises coating and drying a photo-crosslinking composition containing a photoinitiator and a solvent on the outer side of the polyolefin porous support.

14. The method for manufacturing a crosslinked structure-containing separator for a lithium secondary battery according to claim 13, wherein the step of coating and drying a photo-crosslinking composition containing a photoinitiator and a solvent on the outer side of the polyolefin porous support comprises:
coating a slurry for forming an inorganic composite porous layer comprising an inorganic filler, a first binder polymer and a dispersion medium on at least one surface of the polyolefin porous support, followed by drying, to form an inorganic composite porous layer; and
applying a coating solution for forming a porous adhesive layer comprising a second binder polymer, the photoinitiator and the solvent to the top surface of the inorganic composite porous layer, followed by drying.

15. A lithium secondary battery comprising a positive electrode, a negative electrode and a separator for a lithium secondary battery interposed between the positive electrode and the negative electrode, wherein the separator for a lithium secondary battery is the crosslinked structure-containing separator for a lithium secondary battery as defined in claim 2.

## Patentansprüche

1. Poröser Polyolefin-Träger mit vernetzter Struktur, der in den Polyolefinketten eine Anzahl von Doppelbindungen von 0,01 bis 0,6 pro 1000 Kohlenstoffatomen aufweist, wie durch ¹H-NMR bestimmt, und Polymerketten umfasst, die direkt miteinander verbunden sind.

2. Separator mit vernetzter Struktur für eine Lithium-Sekundärbatterie, umfassend den Polyolefin-Träger mit vernetzter Struktur nach Anspruch 1.

3. Separator mit vernetzter Struktur für eine Lithium-Sekundärbatterie nach Anspruch 2, der weiter eine anorganische poröse Verbundschicht umfasst, die auf mindestens einer Oberfläche des porösen Polyolefin-Trägers mit vernetzter Struktur angeordnet ist und einen anorganischen Füllstoff und ein Bindemittelpolymer umfasst.

4. Separator mit vernetzter Struktur für eine Lithium-Sekundärbatterie nach Anspruch 2, weiter umfassend:
eine anorganische poröse Verbundschicht, die auf mindestens einer Oberfläche des porösen Polyolefin-Trägers mit vernetzter Struktur angeordnet ist und einen anorganischen Füllstoff und ein erstes Bindemittelpolymer umfasst; und
eine poröse Klebeschicht, die auf der anorganischen porösen Verbundschicht angeordnet ist und ein zweites Bindemittelpolymer einschließt.

5. Separator mit vernetzter Struktur für eine Lithium-Sekundärbatterie nach Anspruch 4,
wobei das erste Bindemittelpolymer Acrylpolymer, Polyacrylsäure, StyrolButadien-Kautschuk, Polyvinylalkohol oder zwei oder mehr davon umfasst; und/oder
wobei das zweite Bindemittelpolymer Poly(vinylidenfluorid), Poly(vinylidenfluorid-co-hexafluorpropylen), Poly(vinylidenfluorid-co-trichlorethylen), Poly(vinylidenfluorid-co-tetrafluorethylen), Poly(vinylidenfluorid-co-trifluorethylen), Poly(methylmethacrylat), Poly(ethylhexylacrylat), Poly(butylacrylat), Poly(acrylnitril), Poly(vinylpyrrolidon), Poly(vinylacetat), Poly(ethylhexylacrylat-co-methylmethacrylat), Poly(ethylen-co-vinylacetat), Polyethylenoxid, Poly(arylat) oder zwei oder mehr davon umfasst.

6. Separator mit vernetzter Struktur für eine Lithium-Sekundärbatterie nach Anspruch 2, der eine Schmelztemperatur von 160 °C oder höher aufweist und/oder eine Abschalttemperatur von 145 °C oder weniger aufweist.

7. Verfahren zur Herstellung eines Separators mit vernetzter Struktur für eine Lithium-Sekundärbatterie, umfassend die Schritte:
Vorbereiten eines porösen Polyolefin-Trägers, der einen Photoinitiator umfasst und eine Anzahl von Doppelbindungen von 0,01 bis 0,5 pro 1000 Kohlenstoffatomen, wie durch ¹H-NMR bestimmt, in den Polyolefinketten aufweist; und
Bestrahlen des porösen Polyolefin-Trägers, der einen Photoinitiator einschließt, mit ultravioletten Strahlen,
wobei der Gehalt des Photoinitiators 0,015-0,36 Gewichtsteile, auf der Grundlage von 100 Gewichtsteilen des porösen Polyolefin-Trägers, beträgt.

8. Verfahren zur Herstellung eines Separators mit vernetzter Struktur für eine Lithium-Sekundärbatterie nach Anspruch 7, wobei im Schritt des Vorbereitens eines porösen Polyolefin-Trägers ein Antioxidans weiter hinzugefügt wird und der Gehalt des Antioxidans 500-20000 ppm, auf der Grundlage des Gewichts des porösen Polyolefin-Trägers, beträgt.

9. Verfahren zur Herstellung eines Separators mit vernetzter Struktur für eine Lithium-Sekundärbatterie nach Anspruch 8, wobei das Antioxidans ein erstes Antioxidans, das ein Radikalfänger ist, und ein zweites Antioxidans, das ein Peroxidzersetzungsmittel ist, umfasst.

10. Verfahren zur Herstellung eines Separators mit vernetzter Struktur für eine Lithium-Sekundärbatterie nach Anspruch 9,
wobei das erste Antioxidans ein phenolisches Antioxidans, ein Antioxidans auf Aminbasis oder eine Mischung davon umfasst; und/oder
wobei das zweite Antioxidans ein Antioxidans auf Phosphorbasis, ein Antioxidans auf Schwefelbasis oder eine Mischung davon umfasst.

11. Verfahren zur Herstellung eines Separators mit vernetzter Struktur für eine Lithium-Sekundärbatterie nach Anspruch 9, wobei der Gehalt des ersten Antioxidans 500-10000 ppm, auf der Grundlage des Gewichts des porösen Polyolefin-Trägers, beträgt und der Gehalt des zweiten Antioxidans 500-10000 ppm, auf der Grundlage des Gewichts des porösen Polyolefin-Trägers, beträgt.

12. Verfahren zur Herstellung eines Separators mit vernetzter Struktur für eine Lithium-Sekundärbatterie nach Anspruch 7, wobei der Photoinitiator einen Photoinitiator vom Typ 2 umfasst.

13. Verfahren zur Herstellung eines Separators mit vernetzter Struktur für eine Lithium-Sekundärbatterie nach Anspruch 7, wobei der Schritt des Vorbereitens eines porösen Polyolefin-Trägers das Beschichten und Trocknen einer photovernetzenden Zusammensetzung, die einen Photoinitiator und ein Lösungsmittel enthält, auf der Außenseite des porösen Polyolefin-Trägers umfasst.

14. Verfahren zur Herstellung eines Separators mit vernetzter Struktur für eine Lithium-Sekundärbatterie nach Anspruch 13, wobei der Schritt des Beschichtens und Trocknens einer photovernetzenden Zusammensetzung, die einen Photoinitiator und ein Lösungsmittel enthält, auf der Außenseite des porösen Polyolefin-Trägers Folgendes umfasst:
Auftragen einer Aufschlämmung zur Bildung einer anorganischen porösen Verbundschicht, die einen anorganischen Füllstoff, ein erstes Bindemittelpolymer und ein Dispersionsmedium umfasst, auf mindestens einer Oberfläche des porösen Polyolefin-Trägers, gefolgt von Trocknen, sodass eine anorganische poröse Verbundschicht gebildet wird; und
Aufbringen einer Beschichtungslösung zur Bildung einer porösen Klebeschicht, die ein zweites Bindemittelpolymer, den Photoinitiator und das Lösungsmittel umfasst, auf die Oberseite der anorganischen porösen Verbundschicht, gefolgt von Trocknen.

15. Lithium-Sekundärbatterie, die eine positive Elektrode, eine negative Elektrode und einen Separator für eine Lithium-Sekundärbatterie, der zwischen der positiven Elektrode und der negativen Elektrode eingefügt ist, umfasst, wobei der Separator für eine Lithium-Sekundärbatterie der Separator mit vernetzter Struktur für eine Lithium-Sekundärbatterie nach Anspruch 2 ist.

## Revendications

1. Support poreux en polyoléfine contenant une structure réticulée qui présente un nombre de doubles liaisons présentes dans les chaînes de polyoléfine de 0,01-0,6 pour 1 000 atomes de carbone, tel que déterminé par RMN-¹H, et comprend des chaînes polymères directement reliées les unes aux autres.

2. Séparateur contenant une structure réticulée pour une batterie secondaire au lithium comprenant le support en polyoléfine contenant une structure réticulée tel que défini dans la revendication 1.

3. Séparateur contenant une structure réticulée pour une batterie secondaire au lithium selon la revendication 2, comprenant en outre une couche poreuse composite inorganique disposée sur au moins une surface du support poreux en polyoléfine contenant une structure réticulée et comprenant une charge inorganique et un polymère liant.

4. Séparateur contenant une structure réticulée pour une batterie secondaire au lithium selon la revendication 2, qui comprend en outre :
une couche poreuse composite inorganique disposée sur au moins une surface du support poreux en polyoléfine contenant une structure réticulée et comprenant une charge inorganique et un premier polymère liant ; et
une couche adhésive poreuse disposée sur la couche poreuse composite inorganique et incluant un deuxième polymère liant.

5. Séparateur contenant une structure réticulée pour une batterie secondaire au lithium selon la revendication 4,
dans lequel le premier polymère liant comprend un polymère acrylique, de l'acide polyacrylique, du caoutchouc styrène-butadiène, de l'alcool polyvinylique, ou deux ou plus de ceux-ci ; et/ou
dans lequel le deuxième polymère liant comprend du poly(fluorure de vinylidène), du poly(fluorure de vinylidène-co-hexafluoropropylène), du poly(fluorure de vinylidène-co-trichloroéthylène), du poly(fluorure de vinylidène-co-tétrafluoroéthylène), du poly(fluorure de vinylidène-co-trifluoroéthylène), du poly(méthacrylate de méthyle), du poly(acrylate d'éthylhexyle), du poly(acrylate de butyle), du poly(acrylonitrile), de la poly(vinylpyrrolidone), du poly(acétate de vinyle), du poly(acrylate d'éthylhexyle-co-méthacrylate de méthyle), du poly(éthylène-co-acétate de vinyle), de l'oxyde de polyéthylène, du poly(arylate) ou deux ou plus de ceux-ci.

6. Séparateur contenant une structure réticulée pour une batterie secondaire au lithium selon la revendication 2, qui présente une température de fusion de 160 °C ou plus et/ou présente une température d'arrêt de 145 °C ou moins.

7. Procédé de fabrication d'un séparateur contenant une structure réticulée pour une batterie secondaire au lithium, comprenant les étapes suivantes :
la préparation d'un support poreux en polyoléfine comprenant un photo-initiateur et présentant un nombre de doubles liaisons présentes dans les chaînes de polyoléfine de 0,01-0,5 pour 1 000 atomes de carbone, tel que déterminé par RMN-¹H ; et
l'exposition du support poreux en polyoléfine incluant un photo-initiateur à des rayons ultraviolets,
dans lequel la teneur en photo-initiateur est de 0,015-0,36 partie en poids sur la base de 100 parties en poids du support poreux en polyoléfine.

8. Procédé de fabrication d'un séparateur contenant une structure réticulée pour une batterie secondaire au lithium selon la revendication 7, dans lequel un antioxydant est en outre ajouté dans l'étape de préparation d'un support poreux en polyoléfine, et la teneur en antioxydant est de 500-20 000 ppm sur la base du poids du support poreux en polyoléfine.

9. Procédé de fabrication d'un séparateur contenant une structure réticulée pour une batterie secondaire au lithium selon la revendication 8, dans lequel l'antioxydant comprend un premier antioxydant qui est un piégeur de radicaux et un deuxième antioxydant qui est un décomposeur de peroxydes.

10. Procédé de fabrication d'un séparateur contenant une structure réticulée pour une batterie secondaire au lithium selon la revendication 9,
dans lequel le premier antioxydant comprend un antioxydant phénolique, un antioxydant aminé ou un mélange de ceux-ci ; et/ou
dans lequel le deuxième antioxydant comprend un antioxydant phosphoré, un antioxydant sulfuré ou un mélange de ceux-ci.

11. Procédé de fabrication d'un séparateur contenant une structure réticulée pour une batterie secondaire au lithium selon la revendication 9, dans lequel la teneur en premier antioxydant est de 500-10 000 ppm sur la base du poids du support poreux en polyoléfine, et la teneur en deuxième antioxydant est de 500-10 000 ppm sur la base du poids du support poreux en polyoléfine.

12. Procédé de fabrication d'un séparateur contenant une structure réticulée pour une batterie secondaire au lithium selon la revendication 7, dans lequel le photo-initiateur comprend un photo-initiateur de type 2.

13. Procédé de fabrication d'un séparateur contenant une structure réticulée pour une batterie secondaire au lithium selon la revendication 7, dans lequel l'étape de préparation d'un support poreux en polyoléfine comprend le dépôt par revêtement et le séchage d'une composition de photoréticulation contenant un photo-initiateur et un solvant sur le côté externe du support poreux en polyoléfine.

14. Procédé de fabrication d'un séparateur contenant une structure réticulée pour une batterie secondaire au lithium selon la revendication 13, dans lequel l'étape de dépôt par revêtement et de séchage d'une composition de photoréticulation contenant un photo-initiateur et un solvant sur le côté externe du support poreux en polyoléfine comprend :
le dépôt par revêtement d'une suspension destinée à former une couche poreuse composite inorganique comprenant une charge inorganique, un premier polymère liant et un milieu de dispersion sur au moins une surface du support poreux en polyoléfine, suivi d'un séchage, pour former une couche poreuse composite inorganique ; et
l'application d'une solution de revêtement destinée à former une couche adhésive poreuse comprenant un deuxième polymère liant, le photo-initiateur et le solvant sur la surface supérieure de la couche poreuse composite inorganique, suivie d'un séchage.

15. Batterie secondaire au lithium comprenant une électrode positive, une électrode négative et un séparateur pour une batterie secondaire au lithium interposé entre l'électrode positive et l'électrode négative, dans laquelle le séparateur pour une batterie secondaire au lithium est le séparateur contenant une structure réticulée pour une batterie secondaire au lithium tel que défini dans la revendication 2.
